# EUROPEAN PATENT APPLICATION

(11) **EP 4 786 145 A2**
(43) Date of publication of application: **05.08.2026**
(21) Application number: 26183255.4
(22) Date of filing: 05.06.2026
(51) Int. Cl.: B29C 64/124, B29C 64/245, B29C 64/259, B29C 64/321, B29C 64/364, B33Y 30/00, B33Y 40/00

(54) **CONTAINER ASSEMBLY AND PRINITNG DEVICE**

(30) Priority: 31.07.2025 CN 202511073917; 30.09.2025 CN 202511433214; 31.12.2025 CN 202512059706
(71) Applicant: Shining 3D Tech Co., Ltd., Hangzhou, Zhejiang 311258 (CN)
(72) Inventor: ZHAO, Xiaobo, Hangzhou, 311258 (CN); TAALAB, Elias, Hangzhou, 311258 (CN); CHEN, Da, Hangzhou, 311258 (CN); HE, Junlin, Hangzhou, 311258 (CN)
(74) Representative: Dai, Simin

(57) **Abstract**

The present application provides a container assembly and a printing device. The container assembly includes an accommodating chamber, a light-transmitting assembly and a platform assembly. The accommodating chamber is configured to receive a printing material. The platform assembly is movable to move away from or towards the light-transmitting assembly. The platform assembly comprises a build platform. A build chamber is formed between the build platform and the light-transmitting assembly. The accommodating chamber comprises the build chamber, and the container assembly is further provided with a vent communicating with the accommodating chamber.

## Description

### TECHNICAL FIELD

The present application relates to the field of 3D printing technology, and in particular to a container assembly and a printing device.

### BACKGROUND

Most existing stereolithography 3D printing devices use a motorised lead screw to cause a printing platform to move along the Z-axis direction, thereby enabling layer-by-layer 3D printing. This approach poses significant challenges when printing with high-viscosity resin materials.

### SUMMARY

In a first aspect, the present application provides a container assembly. The container assembly includes an outer cylinder and a platform assembly. Along a first direction, a light-transmitting assembly is provided at one end of the outer cylinder, and the platform assembly includes a build platform. The platform assembly is slidably and sealingly connected to an interior of the outer cylinder along the first direction. The container assembly includes a build chamber formed between the build platform and the light-transmitting assembly, and a receiving chamber formed on a side of the build platform away from the light-transmitting assembly. The receiving chamber is for receiving a printing material, and the receiving chamber communicates with the build chamber. The container assembly is further provided with a vent communicating with the receiving chamber.

In a second aspect, the present application provides a printing device, comprising a light source and a positioning assembly. The positioning assembly is configured to secure a container assembly; and the container assembly comprises an accommodating chamber, a light-transmitting assembly and a platform assembly. The accommodating chamber is configured to receive a printing material. The platform assembly is movable to move away from or towards the light-transmitting assembly. The platform assembly comprises a build platform, and a build chamber is formed between the build platform and the light-transmitting assembly. The accommodating chamber comprises the build chamber, and the container assembly is further provided with a vent communicating with the accommodating chamber. The light source is configured to project light towards the light-transmitting assembly of the container assembly.

### BRIEF DESCRIPTION OF DRAWINGS

To illustrate more clearly the specific embodiments of the present application or the technical solutions in the prior art, a brief introduction is provided below to the drawings required for the description of the specific embodiments or the prior art. It is evident that the drawings described below represent some embodiments of the present application; however, a person skilled in the art may derive other drawings from these without requiring an inventive step.
FIG. 1 is a side view of the printing system provided by Example 1 of the present application.
FIG. 2A is a schematic diagram of the container assembly of the printing system provided by Example 1 of the present application.
FIG. 2B is a side view of the container assembly of the printing system provided by Example 1 of the present application prior to printing.
FIG. 2C is a side view of the container assembly of the printing system provided by Example 1 of the present application after printing.
FIG. 3 is an exploded view of the container assembly of the printing system provided by Example 1 of the present application.
FIG. 4 is a first schematic diagram of the structure of the container assembly of the printing system provided by Example 1 of the present application.
FIG. 5 is a second schematic diagram of the structure of the container assembly of the printing system provided by Example 1 of the present application.
FIG. 6 is a sectional view along line B-B in FIG. 2B.
FIG. 7 is an enlarged view of part H in FIG. 6.
FIG. 8 is an enlarged view of part G in FIG. 6.
FIG. 9 is a sectional view along line C-C in FIG. 2C.
FIG. 10 is a schematic diagram of the printing system provided by Example 1 of the present application after printing.
FIG. 11 is a sectional view of the printing system provided by Example 1 of the present application prior to printing.
FIG. 12 is an enlarged view of part M in FIG. 11.
FIG. 13 is a sectional view of the printing system provided by Example 1 of the present application after printing.
FIG. 14 is a sectional view along line A-A in FIG. 1.
FIG. 15 is a schematic diagram of the positioning assembly of the printing system provided by Example 1 of the present application prior to clamping.
FIG. 16 is a schematic diagram of the positioning assembly of the printing system provided by Example 1 of the present application after clamping.
FIG. 17 is a schematic diagram of the mounting platform of the positioning assembly of the printing system provided by Example 1 of the present application.
FIG. 18 is a schematic diagram of the positioning assembly of the printing system provided by Example 1 of the present application after the mounting platform has been connected to the container assembly.
FIG. 19 is an exploded view of the clamping portion of the positioning assembly of the printing system provided by Example 1 of the present application.
FIG. 20 is a schematic diagram of the clamping portion of the positioning assembly of the printing system provided by Example 1 of the present application when clamping in place.
FIG. 21 is a sectional view of another printing platform of the printing system provided by Example 1 of the present application.
FIG. 22 is a schematic diagram of another container assembly of the printing system provided by Example 1 of the present application prior to printing.
FIG. 23 is an exploded view of the container assembly shown in FIG. 22.
FIG. 24 is a sectional view of the container assembly shown in FIG. 22 after printing.
FIG. 25 is a schematic diagram of the printing system provided by Example 2 of the present application.
FIG. 26 is a front view of the printing system provided by Example 2 of the present application prior to locking.
FIG. 27 is a sectional view of a local area indicated using dash dot line in FIG. 26 along line D-D.
FIG. 28 is an exploded view of the clamping assembly of the printing system provided by Example 2 of the present application.
FIG. 29 is a schematic diagram of the structure of the locking device provided by the present application when open.
FIG. 30 is a schematic structural diagram of the locking device provided by an embodiment of the present application when closed.
FIG. 31 is an exploded schematic diagram of the locking device provided by an embodiment of the present application.
FIG. 32 is a schematic sectional view of the locking device provided by an embodiment of the present application.
FIG. 33 is an exploded schematic diagram of the printing device provided by an embodiment of the present application.
FIG. 34 is a schematic sectional view of the printing device provided by an embodiment of the present application.
FIG. 35 is a structural schematic diagram of the locking device provided in an embodiment of the present application.
FIG. 36 is an exploded schematic diagram of the locking device provided in an embodiment of the present application.
FIG. 37 is a structural schematic diagram of the printing device provided in an embodiment of the present application.
FIG. 38 is a sectional schematic diagram along line A-A in FIG. 37.
FIG. 39 is a structural schematic diagram of the piercing member provided in an embodiment of the present application.

Numeral reference: 100 - container assembly; 110 - outer cylinder; 111 - light-transmitting film; 112 - lid; 1121 - third skirt; 11211 - third protrusion and recess structure; 11212 - fifth protrusion and recess structure; 11213 - third sealing ring; 113 - positioning protrusion; 114 - fourth protrusion and recess structure; 115 - sixth protrusion and recess structure; 116 - seal ring mounting groove; 120 - platform assembly; 121 - receiving chamber; 122 - fluid outlet; 123 - vent; 124 - inner cylinder body; 1241 - second protrusion and recess structure; 12411 - second guide slope; 12412 - second protrusion; 12413 - second groove; 125 - cover body; 1251 - first protrusion and recess structure; 12511 - first guide slope; 12512 - first protrusion; 12513 - first groove; 1252-first skirt; 1253-reinforced rib body; 1254-second skirt; 1255-second positioning structure; 126-second sealing ring; 130-first sealing ring; 140-build chamber; 150-annular sealing flange;
200-positioning assembly; 210-mounting platform; 211-positioning recess; 212-support platform; 213 - light-transmitting support member; 220 - clamping portion; 221 - mounting base; 222 - clamping arm; 223 - linkage block; 2231 - stop block; 224 - handle; 225 - first pivot shaft; 226 - second pivot shaft; 227 - third pivot shaft; 228 - fourth pivot shaft;
300 - gas injecting mechanism; 310 - gas outlet connector; 320 - elastic sealing sleeve; 321 - sealing disc; 330 - limiting portion; 331 - first positioning structure; 340 - insertion port; 350 - piercing element;
400 - limiting mechanism; 410 - lead screw; 420 - slider; 430 - guide rail; 440 - guide slot;
510 - top plate; 520 - bottom plate; 530 - connecting column;
60 - locking mechanism
610 - first limiting member; 611 - first slot; 6111 - projection; 612 - mounting hole; 613 - second guiding portion;
620 - second limiting member; 621 - guiding slot; 622-second slot; 623-first guiding portion; 624-stepped component;
630-support portion; 640-rotating member; 641-guiding block; 642-first shaft; 643-rotating body; 644-protruding end; 650-handle; 660-first bearing; 670-spring;
10-locking device;
20-base; 21-through hole; 22-third mounting slot;
30-drive assembly; 31-drive unit; 32-transmission assembly; 3211-first transmission member; 3221-second transmission member;
40-rotating portion; 41-outer contour; 411-first contour section; 412 - second contour section; 42 - through-hole; 421 - third transmission member; 43 - second bearing; 44 - stepped portion;
50 - snap latching assembly; 51 - latch hook; 511 - force-receiving end; 512 - locking end; 513 - first mounting slot; 514 - second mounting slot; 52 - rotating shaft; 53 - elastic member;
600-adapter;
700-printing device; 710-cantilever; 711-positioning portion; 712-vent hole; 731-projection; 740-buffer member;
800-printing system;
900-passage;
1000-device body.

### DETAILED DESCRIPTION

To make the objectives, technical solutions and advantages of the embodiments of the present application clearer, the technical solutions of the embodiments of the present application will be described clearly and completely below with reference to the accompanying drawings. It is evident that the embodiments described constitute only some, and not all, of the embodiments of the present application. Typically, the components of the embodiments of the present application described and illustrated in the accompanying drawings may be arranged and designed in various different configurations.

Consequently, the detailed description of the embodiments of the present application provided in the accompanying drawings is not intended to limit the scope of the present application as claimed, but merely illustrates selected embodiments of the present application. All other embodiments obtained by a person skilled in the art based on the embodiments of the present application without the need for inventive labour fall within the scope of protection of the present application.

It should be noted that similar reference numerals and letters in the accompanying drawings denote similar elements; therefore, once an element has been defined in one drawing, it need not be further defined or explained in subsequent drawings.

In the description of the present application, it should be noted that terms such as "centre", "upper", "lower", "left", "right", "vertical", "horizontal", "inner", "outer" and the like indicate orientation or positional relationships based on the orientation or positional relationships shown in the drawings, or the orientation or positional relationships in which the product of the present application is customarily placed when in use. These terms are used solely for the convenience of describing the present application and to simplify the description, and are not intended to indicate or imply that the devices or elements referred to must have a specific orientation, be constructed in a specific orientation, or operate in a specific orientation; therefore, they must not be construed as limiting the scope of the present application. Furthermore, terms such as "first", "second" and "third" are used solely for the purpose of distinguishing between elements in the description and should not be construed as indicating or implying relative importance.

Moreover, terms such as "horizontal" and "vertical" do not require components to be absolutely horizontal or vertical, but may be slightly inclined. For example, "horizontal" merely refers to a direction that is more horizontal relative to "vertical"; it does not mean that the structure must be completely horizontal, but may be slightly inclined.

It should also be noted in the description of the present application that, unless otherwise explicitly stipulated or limited, the terms "arranged", "mounted", "connected" and "coupled" should be interpreted broadly. For example, they may refer to a fixed connection, a detachable connection or an integral connection; they may refer to a mechanical connection or an electrical connection; they may refer to a direct connection or an indirect connection via an intermediate medium; or they may refer to internal communication between two components. A person skilled in the art will be able to understand the specific meaning of the above terms in the context of the present application based on the specific circumstances.

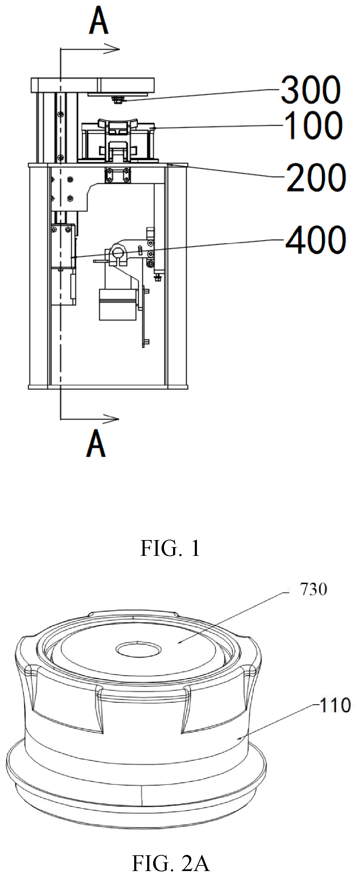

As shown in FIG. 1, a container assembly 100 provided by the present application is applicable for use in a 3D printing system. The printing system further includes a positioning assembly 200, a gas injecting mechanism 300 and a limiting mechanism 400.

A primary function of the gas injecting mechanism 300 is to control an internal pressure of an accommodating chamber formed by a container assembly 100 by introducing gas into the accommodating chamber. It may also be used to expel gas. During a printing process, the gas injecting mechanism 300 achieves one or more of the following functions by establishing a pressure difference between the interior and exterior of the chamber. Firstly, upon completion of curing of each layer, the internal chamber pressure is increased to exert an upward force on the platform assembly 120 whilst simultaneously exert a downward force on a light-transmitting assembly at the bottom of the container assembly 100, thereby effectively accelerating separation of the cured layer from the light-transmitting assembly, that is, a release process. Secondly, during the release process, the increased gas pressure causes the liquid printing material below to rapidly flow back into the area vacated by the upward movement of the platform assembly 120, quickly filling a gap created by the separation. This creates a pressure surge in the gap between the platform assembly 120 and the light-transmitting assembly, accelerating release and preparing for the printing of the next layer, which is friendly to high-viscosity printing materials. Furthermore, the gas injecting mechanism 300 provides controllable air pressure and can also serve as a drive force source to propel the entire platform assembly 120 upwards. The gas injecting mechanism 300 may function solely as a release auxiliary unit, or it may simultaneously serve as a power unit.

The limiting mechanism 400 serves as the system's motion control and limiting portion. Its primary function is to precisely control the vertical position of the platform assembly 120, ensuring the accuracy of thickness of each printed layer. Depending on its manner of connection or interaction with the platform assembly 120, its operating modes can be divided into two types. When the platform assembly 120 moves upwards under pneumatic drive and abuts against the limiting portion 330, the platform assembly 120 moves upwards via the pneumatic drive mode and moves downwards via a motor-driven mode. During the upward movement, the limiting mechanism 400 primarily functions as a limiter. The raised position of the limiting portion 330 restricts the upper limit of the platform assembly 120's movement. The downward movement of the limiting portion 330 itself drives the platform assembly 120, which is in contact with it, to descend synchronously. The limiting portion 330 of the limiting mechanism 400 is directly and rigidly connected to the platform assembly 120. At this point, the limiting portion 330 acts as a direct drive, capable of driving the platform assembly 120 to perform upward and downward movements, thereby completing the positioning of the printing platform. Both the upward and downward movements of the platform assembly 120 are achieved via the motor-driven mode.

In summary, the gas injecting mechanism 300 and the limiting mechanism 400 work in concert; the former is primarily responsible for controlling the flow of printing material and the release process, whilst the latter is primarily responsible for executing precise displacement and position control. Together, they ensure that the 3D printing process based on pneumatic principles can operate stably with high precision and efficiency, whilst achieving low cost. The pneumatic drive mode enables direct control of the precise position of the platform assembly 120 without a need for complex structures.

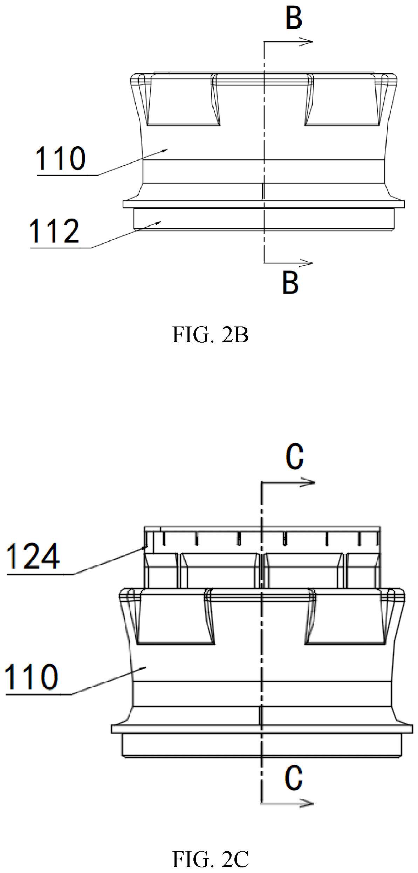

As shown in FIGs. 2A, 2B and 2C, the container assembly includes the accommodating chamber, the light-transmitting assembly and the platform assembly 120. The accommodating chamber is configured to accommodate a printing material, and the platform assembly 120 is capable of moving away from or towards the light-transmitting assembly. The platform assembly 120 includes a build platform. A build chamber is formed between the build platform and the light-transmitting assembly. The accommodating chamber includes the build chamber, and the container assembly is further provided with a vent 123 communicating with the accommodating chamber.

In one embodiment, the accommodating chamber may be a sealed chamber, to facilitate adjustment of air pressure within the chamber.

In one embodiment, dimensions of the container assembly are not less than 8 mm (length) × 8 mm (width) × 8 mm (height) and not greater than 150 mm (length) × 150 mm (width) × 150 mm (height). That is, the length, width and height are all not less than 8 mm and not greater than 150 mm. This ensures that the container assembly can be used to realize printing and can be used to realize printing using high-viscosity materials, thereby resolving a problem that high-viscosity materials, due to their poor flowability, are difficult to spread quickly and evenly within a large-sized container assembly.

The container assembly 100 includes an outer cylinder 110. In this embodiment, the outer cylinder 110 is generally cylindrical in shape. In other embodiments, the outer cylinder 110 may be configured as a tubular member having an elliptical, rectangular, or other polygonal cross-section.

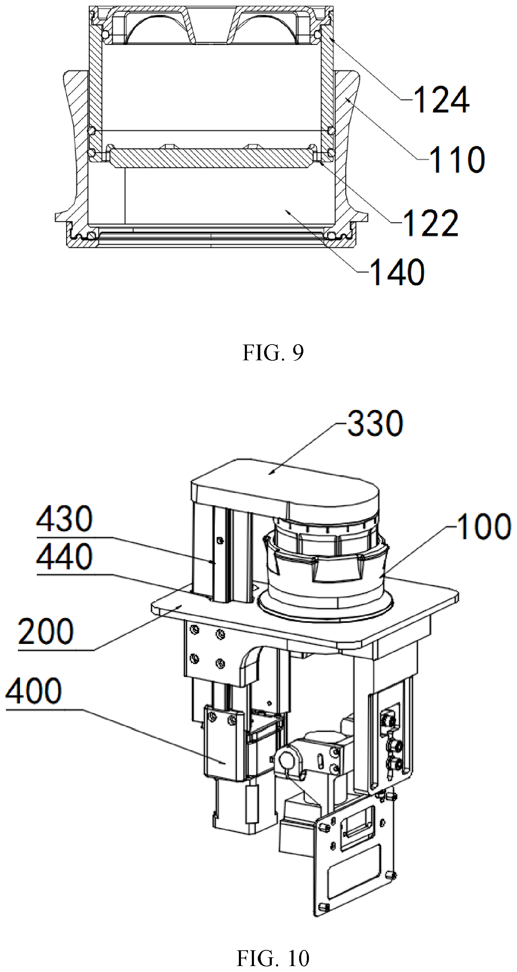

As shown in FIGs. 2C and 9, in this embodiment, a first direction is vertical. A top end of the outer cylinder 110 may have an opening, and the light-transmitting assembly is provided at the bottom of the outer cylinder 110. The platform assembly 120 enters the outer cylinder 110 through the opening at the top and is slidably and sealingly connected to the inner wall of the outer cylinder 110. The bottom surface of the platform assembly 120 forms the build platform, and the area between the build platform and the light-transmitting assembly forms the build chamber 140. When the build platform moves relative to the light-transmitting assembly to a state in which the build platform does not contact the light-transmitting assembly, the area within the cavity of the outer cylinder 110 and between the build platform and the light-transmitting assembly is the build chamber 140. A size of the build chamber 140 varies with the movement of the build platform. The platform assembly 120 is provided with a pressure-receiving surface, and the pressure-receiving surface is a wall of the accommodating chamber. The pressure-receiving surface intersects the direction of movement of the platform assembly 120, for example, perpendicularly.

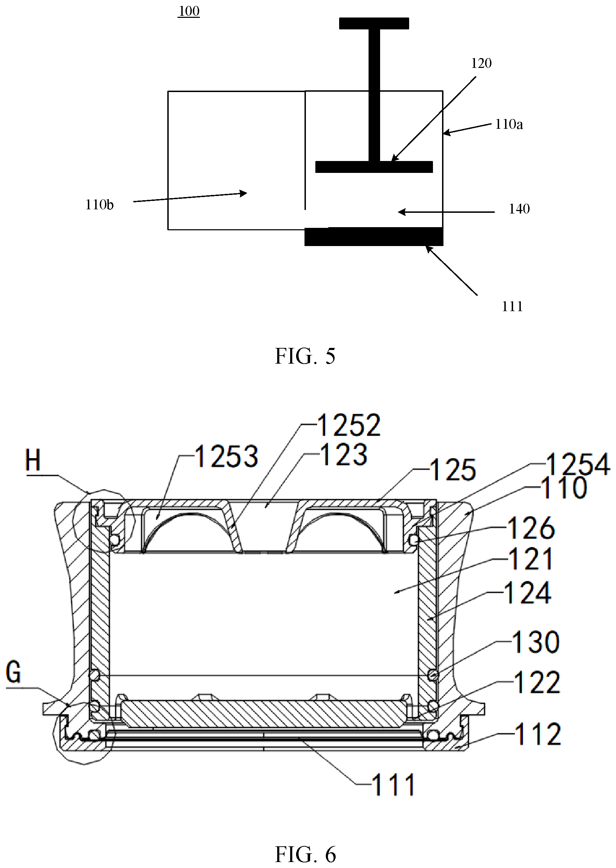

As shown in FIG. 6, in this embodiment, the interior of the platform assembly 120 includes a receiving chamber 121, which is used to receive the printing material. The printing material may be a resin material, such as a photopolymer resin. The accommodating chamber includes the receiving chamber 121.

As shown in FIG. 9, the receiving chamber 121 communicates with the build chamber 140, allowing the printing material to flow between the receiving chamber 121 and the build chamber 140. When the build platform moves into a position where it abuts the light-transmitting assembly, the printing material is essentially located within the receiving chamber 121. When the build platform moves away from the light-transmitting assembly, the printing material flows from the receiving chamber 121 into the build chamber 140. When the build platform moves towards the light-transmitting assembly, the printing material flows from the build chamber 140 into the receiving chamber 121.

As shown in FIG. 6, in this embodiment, the platform assembly 120 is further provided with a vent 123 communicating with the receiving chamber 121. The vent 123 allows the air pressure within the receiving chamber 121 to be controlled. For example, air pressure in the receiving chamber 121 can be increased by injecting gas into the sealed receiving chamber 121. When the air pressure in the receiving chamber 121 exceeds the external atmospheric pressure, the platform assembly 120 moves upwards (i.e. moves away from the light-transmitting assembly). For another example, the sealed receiving chamber 121 may be depressurized with the vent. When the air pressure in the receiving chamber 121 is lower than the external atmospheric pressure, the platform assembly 120 moves downwards (i.e. moves towards the light-transmitting assembly). It should be noted that injecting gas into the receiving chamber 121 is equivalent to injecting gas into the accommodating chamber.

In one embodiment, the vent 123 is located above the liquid surface of the printing material. The vent 123 is situated on the top of the platform assembly 120, or alternatively, it may be situated above a liquid level limit of the platform assembly 120, where the liquid level limit is not higher than a maximum liquid level at which the platform assembly 120 can accommodate the printing material.

In other embodiments, the vent 123 may also be positioned elsewhere, provided that it is ensured that gas can be introduced into the receiving chamber.

As shown in FIGs. 6 and 9, during printing, introducing gas through the vent 123 increases the pressure within the receiving chamber 121 to cause the printing material within the receiving chamber to flow into the build chamber. As the amount of the printing material within the build chamber increases, the printing material pushes the platform assembly upwards and away from the light-transmitting assembly. That is, the platform assembly 120 moves outwards relative to the outer cylinder 110 (i.e. piston motion). The build chamber 140 formed between the bottom surface of the platform assembly 120 and the light-transmitting assembly expands. Light is projected through the light-transmitting assembly onto a build surface (during a first print, the bottom surface of the build platform serves as the build surface; for subsequent prints, the bottom surface of the previous printed layer serves as the build surface), causing the printing material within the build chamber 140 to be cured and adhere to the build surface. By controlling the air pressure to cause the platform assembly 120 to move outwards layer by layer, layer-by-layer printing is achieved, resulting in the formation of the printed object. Pressure is controlled by the injection or release of gas to achieve reciprocating movement of the platform assembly 120. As the platform assembly 120 moves back and forth, the printing material is transferred between the receiving chamber 121 and the build chamber 140. Under the influence of air pressure, the printing material flows rapidly, resolving a problem of slow printing or even failure in printing caused by the sluggish flow of high-viscosity printing material. This overcomes the printing limitations of high-viscosity resin materials, allowing the printing material to flow smoothly and level out, thereby achieving efficient printing. The light-transmitting assembly adheres to the printed layer and deforms and moves upwards as the printed layer moves upwards. Under the control of air pressure, the light-transmitting assembly can rapidly separate from the printed layer and return to its initial flat state, reducing a separation height of the light-transmitting assembly from the printed layer. Compared with a scenario where the platform assembly 120 moves upwards to a relatively higher height to separate the printed layer from the light-transmitting assembly then moves downwards to a next printing height, this significantly reduces the time, thereby further achieving efficient printing.

In this embodiment, the platform assembly 120 includes an inner cylinder, the cavity of which forms the receiving chamber 121. The outer cylinder 110 is plug-fit engaged with the inner cylinder. The cavity of the outer cylinder 110 communicates with the cavity of the inner cylinder; and the inner cylinder is provided with the vent 123. The pressure-receiving surface includes the wall of the inner cylinder cavity facing the build platform.

The shape and dimensions of the inner cylinder are matched to those of the outer cylinder 110 to achieve a sliding seal after insertion. The bottom of the inner cylinder (the build platform) is provided with a fluid outlet 122 to ensure communication between the cavity/chamber of the outer cylinder 110 and the cavity/chamber of the inner cylinder. To avoid structural interference, the vent 123 may be positioned at the top of the inner cylinder.

To prevent air or fluid leakage from the build chamber 140, the inner wall of the outer cylinder 110 forms a sealing fit with the outer wall of the inner cylinder.

In one embodiment capable of achieving sealing, as shown in FIG. 6, at least one first sealing ring 130 is provided on the outer wall of the inner cylinder. The first sealing ring 130 may be fixedly connected to the inner cylinder by means of an adhesive. The first sealing ring 130 is elastic and may be made of rubber. The first sealing ring 130 abuts against the inner wall of the outer cylinder 110 and deforms, filling the gap between the inner cylinder and the outer cylinder 110 to achieve sealing. In this embodiment, two first sealing rings 130 are provided, arranged along the direction of insertion of the outer cylinder 110 into the inner cylinder. In other feasible embodiments, there may be one, three, four or more first sealing rings 130. It should also be noted that the first sealing ring 130 may also be positioned on the inner wall of the outer cylinder 110.

The sealing structure provided by the present application is applied between a first mating surface and a second mating surface. The sealing structure includes a sealing plate positioned on the first mating surface or the second mating surface. The sealing plate extends obliquely from a fixed end to abut the other mating surface.

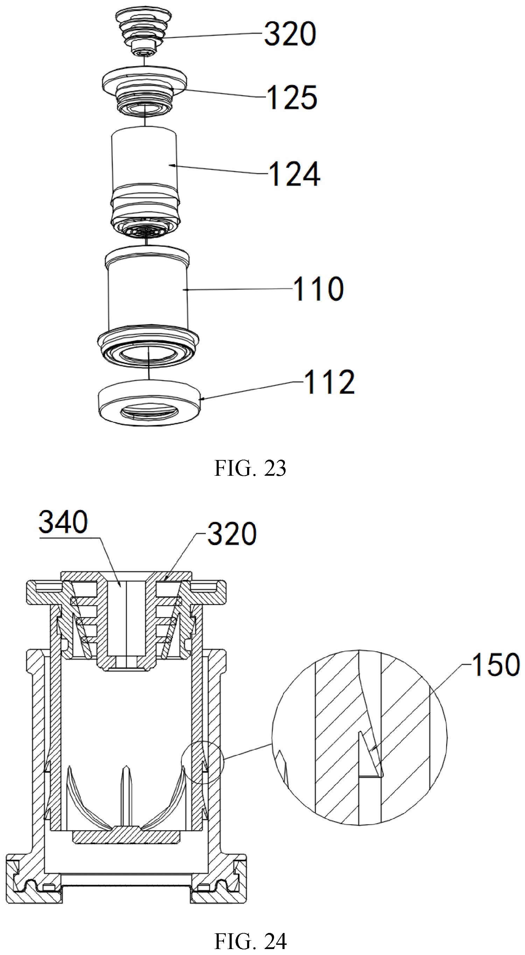

In another embodiment capable of achieving sealing, as shown in FIG. 24, the first mating surface is the outer wall of the inner cylinder, and the second mating surface is the inner wall of the outer cylinder 110. At least one annular sealing flange 150, for example one, two or more, is provided on the outer wall of the inner cylinder. The annular sealing flange 150 may be integrally moulded with the inner cylinder. The free end of the annular sealing flange 150 abuts against the inner wall of the outer cylinder 110 to form a seal, thereby preventing the leakage of gas and printing material.

The annular sealing flange 150 is elastic and is configured as a flange that is inclined and projecting outwards from the outer wall of the inner cylinder, with the inner edge (fixed end) of the annular sealing flange 150 connected to the outer wall of the inner cylinder. The annular sealing flange 150 slopes downwards. In the first direction, the outer edge (free end) of the annular sealing flange 150 is closer to the light-transmitting assembly than the inner edge (fixed end) of the annular sealing flange 150. The annular sealing flange 150, which slopes downwards from the inner edge to the outer edge, bears greater pressure, thereby forming a stable seal. Even when the pressure beneath it is high, it is unlikely to cause the annular sealing flange 150 to fold upwards and leak air. The greater the downward pressure beneath it, the more firmly it abuts against the outer cylinder 110.

Alternatively, at least one annular sealing flange 150, for example, one, two or more, may be provided on the inner wall of the outer cylinder 110. The annular sealing flange 150 may be integrally moulded with the outer cylinder. The free end of the annular sealing flange 150 abuts against the outer wall of the inner cylinder to form a seal, preventing the leakage of gas and printing material.

The annular sealing flange 150 is elastic and is configured as a flange that is inclined inwards and overhangs from the inner wall of the outer cylinder 110. The inner edge (fixed end) of the annular sealing flange 150 is connected to the inner wall of the outer cylinder 110. The annular sealing flange 150 slopes downwards. In the first direction, the outer edge (free end) of the annular sealing flange 150 is closer to the light-transmitting assembly than the inner edge (fixed end) of the annular sealing flange 150. The annular sealing flange 150, which slopes downwards from the outer edge to the inner edge, bears greater pressure, thereby forming a stable seal. Even when the pressure beneath it is very high, this does not easily cause the annular sealing flange 150 to fold upwards and leak air. The greater the downward pressure beneath it, the more firmly it abuts against the inner cylinder.

In this embodiment, a sealed cavity is formed between the outer cylinder 110 and the inner cylinder. That is, the receiving chamber 121 and the build chamber 140 form the sealed cavity. After the sealed cavity is pressurised, the annular sealing flange 150 can move around the fixed end to press tightly against the other mating surface, thereby achieving reliable sealing.

As shown in FIG. 9, the inner cylinder is located inside the outer cylinder 110, and a fluid outlet 122, which communicates the build chamber 140 and the receiving chamber 121, is provided at the end of the inner cylinder facing the light-transmitting assembly (i.e. the build platform).

The printing material extruded from the receiving chamber 121 may flow directly downwards into the build chamber 140 located beneath the inner cylinder, without having to turn, ensuring good fluid flowability. Furthermore, a plurality of fluid outlets 122 may be provided, with the fluid outlets 122 uniformly distributed around a build area of the build platform (i.e., the fluid outlets 122 are positioned to avoid the build area), thereby allowing the printing material to enter the build chamber 140 uniformly from different positions. During the printing process, the printing material flows uniformly around the printed object, replenishing the printing material needed for the printed object. In this embodiment, the various fluid outlets 122 are uniformly distributed along the edge of the build platform circumferentially.

As shown in FIG. 6, a cross-section of the vent 123 gradually decreases from the outside to the inside. In this embodiment, the vent 123 is inverted conical in shape.

When connecting to a gas outlet connector 310 of the gas injecting mechanism 300, the gas outlet connector 310 may be easily inserted into the vent 123. Furthermore, as the gas outlet connector 310 is being inserted, the inner wall of the tapered vent 123 gradually envelops the outer wall of the gas outlet connector 310, thereby enhancing the seal between the vent 123 and the connector.

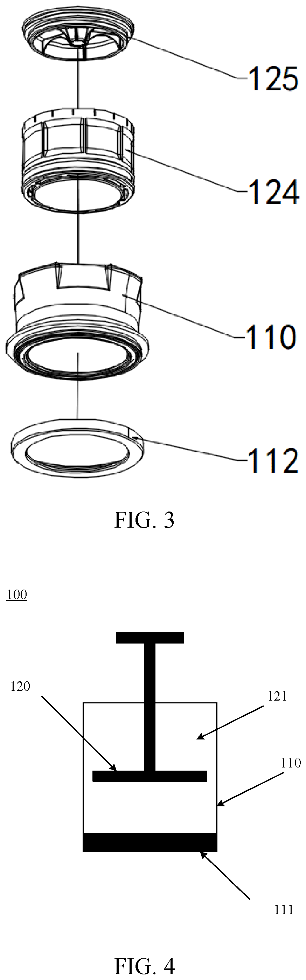

As shown in FIG. 3, a feed port is provided on the inner cylinder, through which printing material can be added to the interior of the inner cylinder. In this embodiment, the vent 123 forms the feed port; that is, the vent 123 and the feed port are a single opening structure. The vent 123 is detachably connected to a sealing cover.

In other embodiments, the vent 123 and the feed port are two separate openings. In this configuration, once the feed port has completed the feeding task, it is to be sealed using a stopper or a similar structure.

As shown in FIGs. 3 to 6, the inner cylinder includes an inner cylinder body 124 and a cover 125, with the feed port provided on the inner cylinder body 124. The cover 125 is provided with the vent 123. The cover 125 is connected to the feed port and serves to seal the feed port.

The top of the inner cylinder body 124 is an open structure to form the feed port. After feeding of printing material is complete, the cover 125 is connected to the inner cylinder body 124 to seal the open structure.

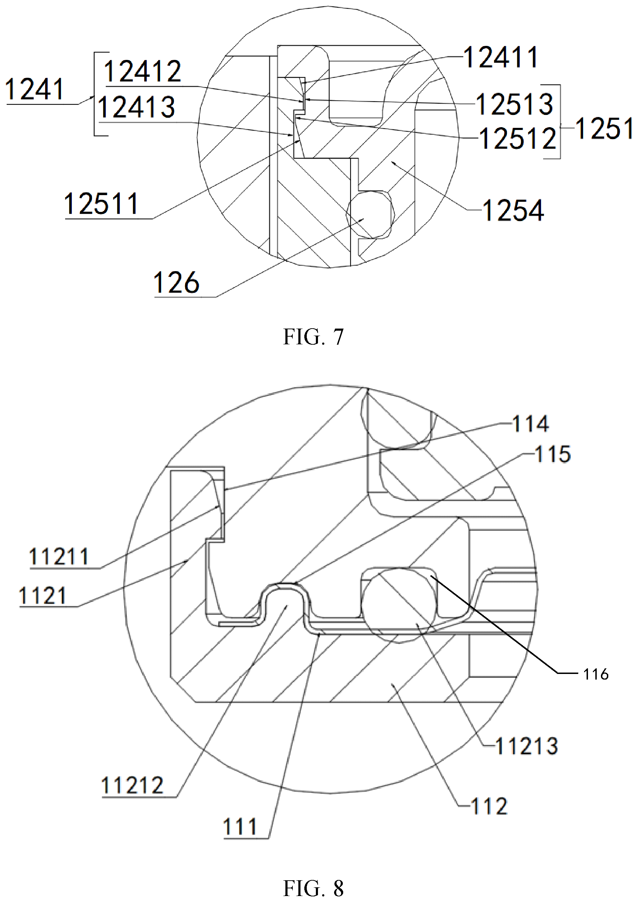

As shown in FIGs. 6 and 7, to enhance sealing performance, at least one second sealing ring 126 is provided between the cover 125 and the inner cylinder body 124. The second sealing ring 126 may be fixed to the cover 125 or to the inner cylinder body 124. The second sealing ring 126 is elastic and may be made of rubber. The second sealing ring 126 deforms upon compression, filling the gap between the cover 125 and the inner cylinder body 124 to achieve a seal.

As shown in FIG. 7, the cover 125 and the inner cylinder body 124 are provided with first interlocking protrusion and recess structure 1251 and second interlocking protrusion and recess structure 1241, respectively, to allow the cover 125 and the inner cylinder body 124 to interlock. One of the first interlocking protrusion and recess structure 1251 and the second interlocking protrusion and recess structure 1241 is provided on the cover 125, whilst the other is correspondingly provided on the inner cylinder body 124.

The first protrusion and recess structure 1251 and the second protrusion and recess structure 1241 have complementary interlocking shapes, thereby achieving axial and circumferential locking and positioning to prevent the cover 125 from separating from the inner cylinder body 124.

As shown in FIG. 7, in this embodiment, the first protrusion and recess structure 1251 includes a first protrusion 12512 projecting outwards in the circumferential direction and a first recess 12513 recessed inwards, with the first protrusion 12512 situated below the first recess 12513. Correspondingly, the second protrusion and recess structure 1241 includes a second protrusion 12412 projecting inwards along the circumferential direction and a second recess 12413 recessed outwards. Furthermore, the second protrusion 12412 is situated above the second recess 12413. After the cover 125 is pressed down, it is assembled with the inner cylinder body 124, whereby the first protrusion 12512 engages within the second recess 12413 and the second protrusion 12412 engages within the first recess 12513, thereby forming a double interlocking mechanism that provides enhanced strength and sealing.

To facilitate assembly, a first guiding slope 12511 is provided on the first protrusion 12512 of the first protrusion and recess structure 1251. The first guiding slope 12511 faces outwards and, inclines inwards from top to bottom. The first guiding slope 12511 is designed to make sliding contact with the second protrusion 12412 of the second protrusion and recess structure 1241. During this sliding contact, both components undergo compressive deformation, enabling the first protrusion 12512 to pass over the second protrusion 12412. After the first protrusion 12512 has passed over the second protrusion 12412, it enters the second recess 12413 and returns to its original shape, forming a barrier that prevents reverse (upward) movement. Similarly, a second guiding slope 12411 may be provided on the second protrusion 12412 of the second protrusion and recess structure 1241. The second guiding slope 12411 faces inwards and, inclines inwards from top to bottom. The second guiding slope 12411 may slidably contact with the first guiding slope 12511.

As shown in FIGs. 6 and 7, the cover 125 includes a cover plate and a reinforcing rib body 1253. The vent 123 is provided on the cover. The periphery of the vent 123 on the cover plate is provided with a first skirt 1252 extending into the interior of the receiving chamber 121. The outer periphery of the cover plate is provided with a second skirt 1254. The first skirt 1252 and the second skirt 1254 are arranged at a distance from one another, and the reinforcing rib body 1253 is positioned between the first skirt 1252 and the second skirt 1254.

The cover plate is arranged horizontally, with the vent 123 situated approximately at the centre of the cover plate. The first skirt 1252 has a truncated cone structure tapering from top to bottom to form a passage, facilitating the insertion and securing of the gas outlet connector 310. The second skirt 1254 has a cylindrical structure and is used to connect to the inner cylinder body 124. The first protrusion and recess structure 1251 is provided on the second skirt 1254. Due to the increased pressure within the receiving chamber 121, the reinforcing rib body 1253 is provided between the first skirt 1252 and the second skirt 1254. This enhances the overall strength of the cover plate to prevent deformation, which could otherwise lead to leakage between the cover plate and the inner cylinder body 124.

As shown in FIGs. 6 and 8, the light-transmitting assembly includes a lid 112 and a light-transmitting film 111. The lid 112 is connected to the bottom end of the outer cylinder 110, and the light-transmitting film 111 is clamped and secured between the lid 112 and the outer cylinder 110. Through the aforementioned structure, the light-transmitting film 111 is clamped and fixed in place by the lid 112 and the outer cylinder 110, preventing movement. This achieves a seal and keeps the light-transmitting film 111 taut, thereby preventing the leakage of printing material and avoiding issues during the printing process where the layer thickness and surface flatness of the printed layer fail to meet expectations due to the light-transmitting film 111 not being sufficiently tensioned. It should be noted that the light-transmitting assembly may be a flexible assembly, such as one including a light-transmitting film, or may be a rigid assembly, such as one including a light-transmitting glass plate.

The bottom of the outer cylinder 110 is open. The lid 112 can be connected to the outer cylinder 110 in a snap-fit manner. The light-transmitting film 111 is clamped between the lid 112 and the outer cylinder 110; and the lid 112 and the light-transmitting film 111 seal the open bottom of the outer cylinder 110. Clamping the light-transmitting film 111 simultaneously with the engagement of the lid 112 and the outer cylinder 110 facilitates the assembly and tensioning of the light-transmitting film 111, whilst sealing the open bottom of the outer cylinder 110. The lid 112 is provided with a hollow structure corresponding to the opening, and the light-transmitting film 111 is positioned on the hollow structure. The light-transmitting film 111 may include one or more layers. In one embodiment, the light-transmitting film 111 includes a release film; in another embodiment, the light-transmitting film 111 includes a release film and a light-diffusing film.

A third skirt 1121 extending upwards is provided on the outer edge of the lid 112. The third skirt 1121 forms a receiving area within the lid 112, into which the bottom end of the outer cylinder 110 is inserted to prevent printing material from leaking out. A third protrusion and recess structure 11211 is provided on the third skirt 1121. A fourth protrusion and recess structure 114 is provided on the outer wall of the outer cylinder 110. The lid 112 is snapped to the fourth protrusion and recess structure 114 via the third protrusion and recess structure 11211.

As shown in FIG. 8, the third protrusion and recess structure 11211 and the fourth protrusion and recess structure 114 are interlocked and fixed. In this embodiment, the fourth protrusion and recess structure 114 includes a recessed structure, whilst the third protrusion and recess structure 11211 includes a protruding structure. The third protrusion and recess structure 11211 engages within the fourth protrusion and recess structure 114, thereby achieving axial and circumferential positioning. By way of example, the third protrusion and recess structure 11211 includes a latch, and the fourth protrusion and recess structure 114 includes a slot, with the latch engaging within the slot. In other words, the lid 112 of this embodiment can be secured by engaging the latch on the third skirt 1121 with the slot on the outer wall of the outer cylinder 110. Once the engagement is complete, the lid 112 cannot move vertically or circumferentially relative to the outer cylinder 110, making installation convenient and ensuring a secure connection at the engagement interface.

In this embodiment, the lid 112 is provided with at least one fifth protrusion and recess structure 11212, and the outer cylinder 110 is provided with at least one sixth protrusion and recess structure 115. The edge of the light-transmitting film 111 is clamped between the fifth protrusion and recess structure 11212 and the sixth protrusion and recess structure 115, to tension the light-transmitting film 111 and achieve a seal to resolve the issue of liquid leakage.

As shown in FIG. 8, the fifth protrusion and recess structure 11212 includes a protrusion, whilst the sixth protrusion and recess structure 115 includes a recess. The protrusion presses the edge of the light-transmitting film 111 into the recess, thereby tensioning the light-transmitting film 111 and achieving a seal to resolve the issue of liquid leakage.

In some embodiments, the lid 112 is provided with the fifth protrusion and recess structure 11212, which is arranged circumferentially around the lid 112; that is to say, the fifth protrusion and recess structure 11212 is arranged in a ring-shaped configuration on the lid 112. Correspondingly, the outer cylinder 110 is provided with the sixth protrusion and recess structure 115, which is arranged circumferentially around the outer cylinder 110; that is to say, the sixth protrusion and recess structure 115 is arranged in a ring-shaped configuration on the outer cylinder 110. The fifth protrusion and recess structure 11212 extends into the interior of the sixth protrusion and recess structure 115, thereby pulling the edge of the light-transmitting film 111 taut and stretching the central region of the light-transmitting film 111.

In other embodiments, the lid 112 is provided with a plurality of fifth protrusion and recess structures 11212, with the plurality of fifth protrusion and recess structures 11212 arranged at intervals along the circumference of the lid 112. Correspondingly, the outer cylinder 110 is provided with a plurality of sixth protrusion and recess structures 115, which are arranged at intervals along the circumference of the outer cylinder 110. The plurality of fifth protrusion and recess structures 11212 correspond one-to-one with the plurality of sixth protrusion and recess structures 115 and interlock with one another, thereby tightening the edges of the light-transmitting film 111 and further tensioning the central region of the light-transmitting film 111.

Referring further to FIG. 8, a sealing ring mounting groove 116 is provided on one of the lid 112 and the outer cylinder 110 in this embodiment. A third sealing ring 11213 is disposed within the sealing ring mounting groove 116, and the light-transmitting film 111 is clamped between the third sealing ring 11213 and one of the lid 112 and the outer cylinder 110.

Through the above structure, the light-transmitting film 111 can be further clamped and secured, thereby further reducing the risk of leakage from the light-transmitting film 111.

In this embodiment, the sealing ring mounting groove 116 is provided on the side of the outer cylinder 110 facing the lid 112, and the sealing ring mounting groove 116 is situated at one end of the fifth protrusion and recess structure 11212 and the sixth protrusion and recess structure 115 that is remote from the edge of the light-transmitting film 111 (i.e., to the right of the fifth protrusion and recess structure 11212 and the sixth protrusion and recess structure 115 shown in FIG. 8).

As shown in FIG. 2C, the outer wall of the outer cylinder 110 is provided with an inwardly recessed curved concave surface, and the positioning assembly 200 positions the outer cylinder 110 via this curved concave surface.

As shown in FIGs. 2C and 3, the outer wall of the inner cylinder body 124 is provided with grooves extending vertically. The grooves serve to enhance the structural strength of the inner cylinder body 124 and mitigate the issue of deformation of the inner cylinder body 124.

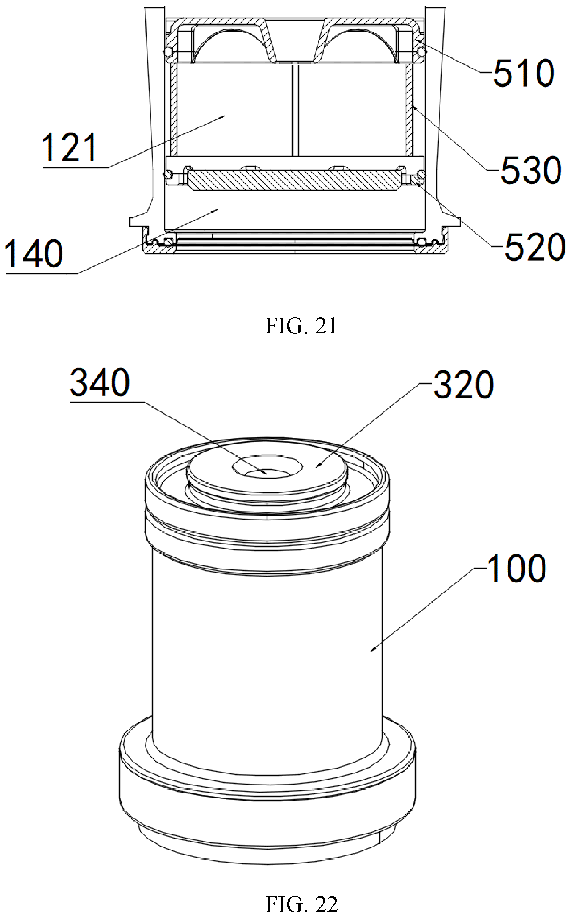

As shown in FIG. 21, in another embodiment, the platform assembly 120 may not be cylindrical in shape. The platform assembly 120 includes a top plate 510 (with a function similar to the cover 125) and a bottom plate 520 (with a function similar to the light-transmitting assembly), which are spaced apart vertically. The bottom plate 520 forms a build platform. The vent 123 is provided in the top plate 510. The fluid outlet 122 is provided in the bottom plate 520. The top plate 510 and the bottom plate 520 are connected by a plurality of vertical connecting columns 530. The circumferential edges of both the top plate 510 and the bottom plate 520 are in sliding seal with the outer cylinder 110. The top plate 510, the bottom plate 520 and the outer cylinder 110 enclose the receiving chamber 121. In this embodiment, only the external configuration of the platform assembly 120 has changed; all other structures are identical to those of the platform assembly 120 in the aforementioned embodiments.

It will be understood that, at the start of printing, the build platform is in contact with the light-transmitting film 111 (with a certain degree of adhesion or bonding force). Under the action of air pressure, the build platform moves upwards. The internal pressure within the receiving chamber is greater than the external pressure. The force acting on the build platform is upward (pushing upwards), whilst the force acting on the light-transmitting film 111 is downward (pressing downwards). This facilitates the separation of the build platform from the light-transmitting film 111. Separation can be achieved by moving the build platform a shorter distance.

In this embodiment, printing is carried out layer by layer. After a layer is printed, the build platform moves upwards by a certain distance, creating a void beneath it. Once the printing material flows to fill this void, printing of the next layer may commence. In the pneumatic printing method, the use of air pressure enables the printing material which possesses a certain degree of viscosity to fill the area beneath the build platform more easily and rapidly, thereby reducing the interval between printing of layers and improving printing efficiency.

In one possible embodiment, as shown in FIGs. 22 to 24, the container assembly 100 may further include an elastic sealing sleeve 320. The elastic sealing sleeve 320 is inserted into the vent 123, with its outer wall abutting the inner wall of the vent 123 to form a seal. An insertion port 340 extending in the vertical direction is provided at the centre of the elastic sealing sleeve 320. The insertion port 340 communicates the external environment and the receiving chamber 121, and is configured to be connected to the gas outlet connector 310 of the gas injecting mechanism 300. The gas outlet connector 310 of the gas injecting mechanism 300 is inserted into the insertion port 340 to inject gas into the receiving chamber 121. In this embodiment, the elastic sealing sleeve 320 forms a part of the container assembly 100 and is disposable.

In other feasible embodiments, the elastic sealing sleeve 320 may also form part of the gas injecting mechanism 300; which will be discussed in detail when describing the printing device below and will not be elaborated upon here. Furthermore, the detailed structure of the elastic sealing sleeve 320 will be described below.

The container assembly in this embodiment is used for printing small-sized objects, such as teeth. Consequently, the build surface is small. The side of the platform assembly 120 facing the light-transmitting assembly may be circular, square or even irregular in shape. When the side is circular, its diameter is less than or equal to 110 mm and greater than or equal to 5 mm, such as 110 mm, 5 mm, 8 mm, 10 mm or 75 mm. When the side is rectangular, its side length is less than or equal to 110 mm and greater than or equal to 5 mm, such as 110 mm, 5 mm, 8 mm, 10 mm or 75 mm. Furthermore, when the side is of an irregular shape, it includes at least one complete circular region, the diameter of which is less than or equal to 110 mm and greater than or equal to 5 mm, such as a diameter of 110 mm, 5 mm, 8 mm, 10 mm or 75 mm; or, the side includes at least one complete rectangular region, the side length of which is less than or equal to 110 mm and greater than or equal to 5 mm, such as 110 mm, 5 mm, 8 mm, 10 mm or 75 mm. Furthermore, to facilitate processing, the diameter of the circular region is greater than or equal to 10 mm. The printing material capsule provided by the present application includes the aforementioned container assembly, where the receiving chamber of the container assembly contains printing material, which may be a resin. The height of the accommodating chamber is less than or equal to 110 mm and greater than or equal to 5 mm, such as 110 mm, 5 mm, 8 mm, 10 mm or 75 mm. If the height of the accommodating chamber is variable, the aforementioned height refers to the minimum height requirement.

The printing material capsule assembly provided by the present application includes a light-shielding structure and the aforementioned container assembly. The light-shielding structure is connected to the container assembly, and the light-shielding structure shields the light-transmitting assembly to prevent external light from entering the receiving chamber through the light-transmitting assembly.

In one embodiment, the light-shielding structure includes a light-shielding cover, which is connected to the end of the container assembly provided with the light-transmitting assembly via a plug-in or threaded connection, thereby enclosing the light-transmitting assembly of the container assembly.

In another embodiment, the light-shielding structure includes a housing that may be opened and closed. The interior of the housing is provided with positioning slots. There may be multiple such slots to accommodate multiple container assemblies. The end of the container assembly containing the light-transmitting assembly is inserted into the positioning slot. On one hand, the bottom of the positioning slot seals the light-transmitting assembly, and on the other hand, once the housing is closed, the entire interior of the housing is kept in darkness, further preventing light from entering the container assembly.

In one embodiment, as shown in FIG. 4, a schematic diagram of the structure of a container assembly provided by an embodiment of the present application is illustrated. The container assembly includes an outer cylinder, the chamber of which serves as a receiving chamber. The outer cylinder includes a light-transmitting assembly (for example, including a light-transmitting film 111) disposed on one side of the chamber; and a platform assembly 120 is slidably and sealingly connected to the outer cylinder.

In this embodiment, the outer cylinder chamber may be used directly as the accommodating chamber, and the light-transmitting assembly may be positioned at one end of the outer cylinder in the axial direction, with the platform assembly 120 being slidably and sealingly connected to the outer cylinder 110. During the release step, the air pressure within the accommodating chamber is increased, causing the light-transmitting assembly to be subjected to a downward force. This accelerates the flow of the printing material, causing it to impact the gap between the platform assembly 120 and the light-transmitting assembly, thereby speeding up release. Furthermore, the flow of the printing material causes it to spread out rapidly, preparing it for printing and improving printing efficiency.

In one embodiment, as shown in FIG. 5, a schematic diagram of the structure of a container assembly provided by an embodiment of the present application is illustrated. The container assembly further includes a first outer cylinder 110a and a second outer cylinder 110b. The first outer cylinder 110a includes a light-transmitting assembly (e.g., including a light-transmitting film 111) disposed on one side of the first outer cylinder chamber of the first outer cylinder 110. The platform assembly 120 is disposed within the first outer cylinder chamber and is slidably and sealingly connected to the first outer cylinder 110a. The second outer cylinder chamber of the second outer cylinder 110b communicates with the build chamber 140, and the receiving chamber includes the second outer cylinder chamber.

In this embodiment, the container assembly may be configured as a dual-cylinder structure. In this configuration, the platform assembly 120 is slidably and sealingly connected to the first outer cylinder 110, ensuring high airtightness of the build chamber 140 during the release step. The second outer cylinder chamber acts as a material storage chamber, continuously supplying printing material to the build chamber 140 via a connecting passage.

### Embodiment 1

As shown in FIG. 10, a printing device provided by the present application includes the aforementioned container assembly 100. The specific structure of the container assembly 100 may refer to the aforementioned container assembly 100 and will not be repeated in detail here.

The container assembly 100 is detachably mounted on a 3D printer. As an implementation, the container assembly 100 may be a disposable item. When printing is to be performed, the container assembly 100 is fitted to the 3D printer for printing, and is discarded upon completion of the printing. For the next print, a different container assembly 100 is fitted for printing. In one embodiment, the container assembly 100 is pre-filled with printing material, such as printing resin; alternatively, printing resin may be injected into the container assembly 100 prior to printing.

As shown in FIGs. 10 to 12, the printing device further includes a limiting mechanism 400 and a gas injecting mechanism 300, where a gas outlet of the gas injecting mechanism 300 is connected to the vent 123. The limiting mechanism 400 includes a limiting portion 330 capable of moving in a first direction, which is used to control the movement position of the platform assembly 120 in the first direction.

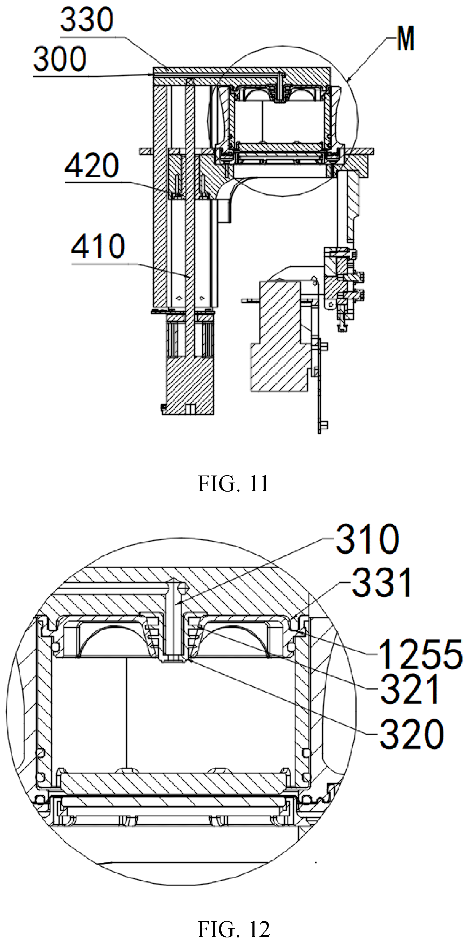

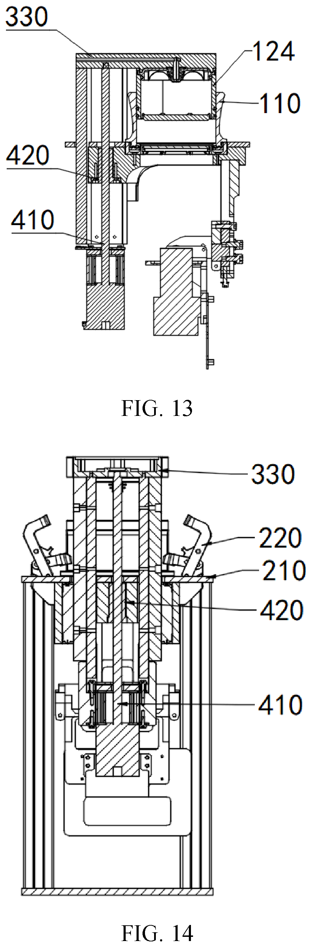

As shown in FIGs. 11 to 13, prior to printing, the gas injecting mechanism 300 is connected to the container assembly 100 to inject gas into the container assembly 100. During the printing process, to control the travel distance of the platform assembly 120, the limiting portion 330 of the limiting mechanism 400 is connected to the platform assembly 120. It should be noted that the limiting portion 330 may be directly connected to the platform assembly 120, driving the movement of the platform assembly 120 through the movement of the limiting portion 330; alternatively, an abutting relationship may be formed between the limiting portion 330 and the platform assembly 120. The movement position of the limiting portion 330 determines the movement position of the platform assembly 120. That is, during the ascent of the platform assembly 120, the limiting portion 330 acts as a stopper and the descent of the limiting portion 330 drives the descent of the platform assembly 120. When the limiting portion 330 is in contact with the platform assembly 120, if the limiting portion 330 moves a distance L in the first direction, the platform assembly 120 moves upwards a distance L under pneumatic drive and stops rising due to the restriction of the limiting portion 330; if the limiting portion 330 moves a distance P in the opposite direction, it drives the platform assembly 120 to move a distance P in the opposite direction. When the limiting portion 330 is directly connected to the platform assembly 120, the limiting portion 330 moves a distance L in the first direction, causing the platform assembly 120 to move synchronously by a distance L; when the limiting portion 330 stops moving, the platform assembly 120 stops moving synchronously; when the limiting portion 330 moves a distance P in the opposite direction, it causes the platform assembly 120 to move a distance P in the opposite direction; when the limiting portion 330 stops moving, the platform assembly 120 stops moving synchronously. In this embodiment, the limiting portion 330 may be configured to rise at a fixed speed; correspondingly, under the limitation of the limiting portion 330, the platform assembly 120 will move vertically upwards at approximately the same speed. The limiting portion 330 moves layer by layer, and the platform assembly 120 moves layer by layer, thereby achieving layer-by-layer printing to form the printed object. This resolves the issue that conventional pneumatic control methods cannot precisely control position, whilst pneumatic control methods capable of precise position control are very costly. It should be noted that, as the vertical distance for the platform assembly 120 to release is often greater than the distance from the current printing position to the next printing position, the platform assembly 120 generally is to first rise to release, then descend to the next printing position, and subsequently undergo photopolymerisation to form the next printing layer. This process is repeated until the printed object is complete. This situation typically occurs when the height required for release exceeds the height required to move to the next printing position and it commonly arises when the light-transmitting assembly is a flexible component. Where the light-transmitting assembly is a rigid component, the platform assembly 120 can usually achieve release whilst ascending to the next printing position.

The gas injecting mechanism 300 is connected to the limiting portion 330. The limiting portion 330 drives the gas injecting mechanism 300 to move towards or away from the vent 123, so that the gas inlet 123 and the vent 123 are docked or decoupled. In this embodiment, the limiting portion 330 moves in coordination with the platform assembly 120 to ensure that the vent 123 and the gas outlet are docked or decoupled. The limiting portion 330 moves synchronously with or towards the platform assembly 120 to ensure that the vent 123 and the gas outlet are docked, whilst the limiting portion 330 moves away from the platform assembly 120 to achieve separation/decouple of the vent 123 and the gas outlet.

In other possible embodiments, the gas injecting mechanism 300 and the limiting portion 330 may be two separate components.

As shown in FIGs. 10 to 12, in this embodiment, to simplify the structure and enhance the degree of integration and automation, the gas injecting mechanism 300 and the limiting portion 330 are integrated onto a single component. The limiting portion 330 includes a cantilever that is capable of moving up and down. The gas injecting mechanism 300 is mounted on the cantilever, and the gas outlet of the gas injecting mechanism 300 is fixedly connected to the cantilever. Prior to printing, the cantilever moves to a position above the mounting location of the container assembly 100. The container assembly 100 is fitted into place, and the cantilever is then lowered so that the outlet of the gas injecting mechanism 300 aligns with the vent 123, whilst the cantilever presses against the top surface of the platform assembly 120 to limit position. During the printing process, the gas injecting mechanism 300 continuously supplies gas into the sealed chamber of the platform assembly 120, maintaining a stable positive pressure within the chamber. Driven by this pressure, the platform assembly 120 is subjected to an upward force. At the same time, the cantilever of the limiting mechanism 400 (i.e. the limiting portion 330), under the control of the drive unit, moves upwards layer by layer in accordance with the preset layer thickness. As the lower side of the cantilever remains in constant contact with the top of the platform assembly 120, and the gas outlet 310 of the gas injecting mechanism 300 remains in a sealed connection with the vent 123 of the platform assembly 120 throughout the cantilever's movement, the upward motion of the platform assembly 120 is driven by the air pressure within the sealed chamber, with the final position of the ascent determined by the real-time height of the cantilever. Each lift of the cantilever establishes a new upper height limit for the platform assembly 120 against which it abuts, thereby achieving layer-by-layer lifting and positioning.

As shown in FIG. 12, the gas injecting mechanism 300 includes a gas outlet connector 310, the outlet of which forms an exhaust port. An elastic sealing sleeve 320 is fitted over the outer side of the outlet connector 310, and the elastic sealing sleeve 320 is used to form a sealed connection with the vent 123.

The gas outlet connector 310 is inserted into the interior of the vent 123. The elastic sealing sleeve 320 on the outer side of the gas outlet connector 310 can undergo compression deformation against the inner wall of the first flange 1252, filling the gap between them, thereby enhancing the seal and preventing gas leakage.

By way of example, the gas outlet connector 310 may be fixedly mounted on the cantilever or may be movably connected to the cantilever. When the gas outlet connector 310 is fixedly mounted on the cantilever, it engages and communicates with the vent 123 when the cantilever is mated with the platform assembly.

As shown in FIG. 12, the elastic sealing sleeve 320 includes a sleeve body, on the circumferential outer wall of which sealing flanges 321 projecting outwards are provided. Along the first direction, the number of sealing flanges 321 may be one, two or more. Spaced-apart sealing flanges 321 provide greater space for deformation. When compressed, the sealing flanges 321 undergo greater deformation, thereby better filling the gap between the sleeve body and the first skirt 1252, and facilitating assembly.

Along the first direction, of any two adjacent sealing flanges 321, the outer diameter of the sealing flange 321 closer to the interior of the receiving chamber 121 is smaller than that of the sealing flange 321 further from the interior of the receiving chamber 121.

From top to bottom, the first skirt 1252 has a tapered truncated cone structure. To match the tapered shape of the first skirt 1252, the outer contour of the elastic sealing sleeve 320 is designed to match the shape of the first skirt 1252, facilitating the insertion of the elastic sealing sleeve 320 into the first skirt 1252. Simultaneously, this ensures a larger contact surface between the two, resulting in better sealing performance and easier assembly.

A first positioning structure 331 is provided on the surface of the limiting portion 330 that features a vent; and a second positioning structure 1255 is provided on the cover 125 of the platform assembly 120. The first positioning structure 331 and the second positioning structure 1255 mate to position the limiting portion 330 and the platform assembly 120 in the first direction and in a first plane, where the first plane is perpendicular to the first direction.

The first positioning structure 331 includes a protrusion provided on the bottom surface of the limiting portion 330, whilst the second positioning structure 1255 includes a recess provided on the cover 125. After the limiting portion 330 has been lowered and the gas outlet connector 310 has been inserted into the interior of the vent 123, the first positioning structure 331 is inserted into the second positioning structure 1255 to achieve positioning. Once positioned, the axial direction of the container assembly 100 is perpendicular to the bottom surface of the limiting portion 330, thereby ensuring that the container assembly 100 is oriented vertically. Furthermore, once the first positioning structure 331 has been inserted into and engaged with the second positioning structure 1255, the container assembly 100, held in place by the first positioning structure 331, is prevented from moving relative to it in the circumferential direction. This ensures greater stability of the container assembly 100 during the printing process, preventing any wobbling. The first positioning structure 331 may alternatively include a recess provided on the bottom surface of the limiting portion 330, whilst the second positioning structure 1255 may include a protrusion provided on the cover 125.

As shown in FIGs. 11 to 14, the printing device further includes a frame. The limiting mechanism 400 includes a drive unit, with the limiting portion 330 connected to the drive unit. The drive unit is configured to drive the limiting portion 330 to move in the first direction. The drive unit includes a lead screw 410, a motor and a slider 420. The motor is connected to the lead screw 410 to drive the lead screw 410 to rotate. The slider 420 is threadedly connected to the lead screw 410; and the slider 420 is fixedly connected to the frame. The motor and the limiting portion 330 move only relative to the frame in the first direction, such that when the motor is activated, the motor and the lead screw 410 move together relative to the slider 420 along the first direction.

The lower end of the lead screw 410 is connected to the motor, whilst the upper end is rotatably connected to the limiting portion 330. A relative rotation may occur between the lead screw 410 and the limiting portion 330, but the limiting portion 330 is restricted from rotating relative to the frame. Consequently, during the printing process, the frame remains stationary, and the slider 420 is fixedly connected to the frame. Upon activation of the motor, the lead screw 410 rotates. As the slider 420 remains stationary and the motor is constrained by the frame to move only in the first direction without rotating, the lead screw 410, the motor and the limiting portion 330 move together in the first direction.

As shown in FIG. 10, the motor and the limiting portion 330 are connected via a slide rail 430, and the motor, the limiting portion 330 and the slide rail 430 share the same state of motion. A guide slot 440 is provided on the frame, with which the slide rail 430 is slidably connected. The slide rail 430 slides within the guide slot 440. The guide slot 440 limits a position of the slide rail 430, restricting its movement to the first direction only and preventing rotation.

The printing device further includes a positioning assembly 200 for securing the container assembly 100.

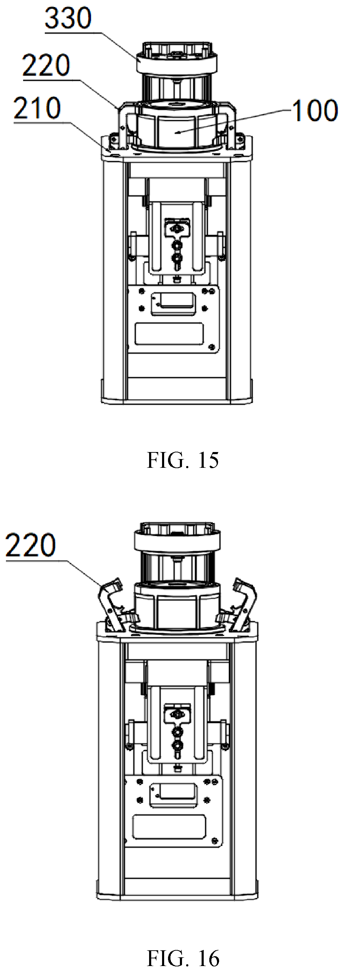

As shown in FIGs. 15 to 17, prior to printing, the container assembly 100 is to be mounted on the main body of the 3D printing device. The outer cylinder 110 is secured to ensure its correct orientation and to prevent it from shifting during the printing process, which could affect the shape of the printed object within the build chamber 140.

The positioning assembly 200 includes a mounting platform 210 and a clamping assembly. The mounting platform 210 is used to position and mount the container assembly 100, whilst the clamping assembly is used to clamp and secure the container assembly 100 to the mounting platform 210. The mounting platform 210 is mounted on the frame, and the clamping assembly is mounted on the mounting platform 210. The clamping assembly may alternatively be mounted on the frame, or mounted directly or indirectly on the mounting platform 210.

The mounting platform 210 provides a standard mounting position for the container assembly 100. Once the bottom of the container assembly 100 is mounted on the mounting platform 210, the vent 123 on the container assembly 100 is precisely aligned vertically with the gas outlet connector 310 on the limiting portion 330. The clamping assembly clamps the container assembly 100 to prevent it from wobbling.

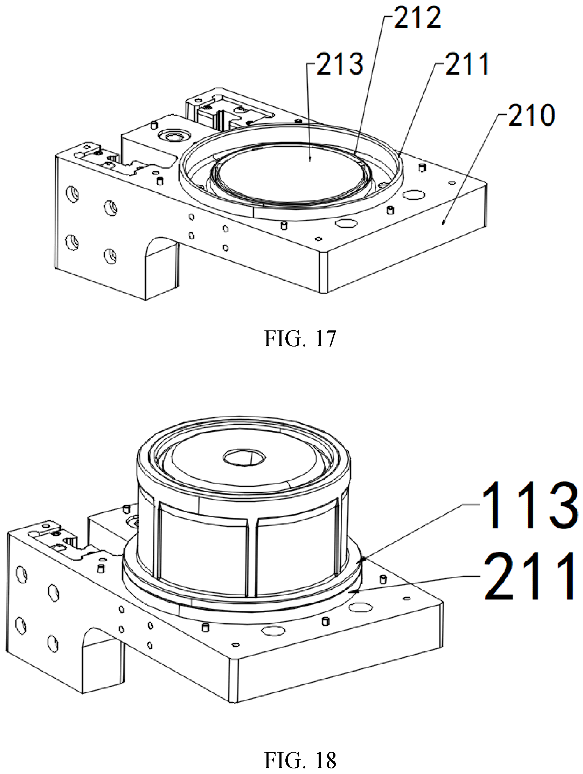

As shown in FIG. 17, a positioning recess 211 is provided on the mounting platform 210 to allow the bottom of the container assembly 100 to be positioned and mounted within the positioning recess 211.

The shape and dimensions of the positioning recess 211 correspond approximately to those of the outer cylinder 110, allowing the outer cylinder 110 to fit snugly within the positioning recess 211. The inner wall of the positioning recess 211 acts as a stop against the outer wall of the outer cylinder 110, thereby providing positioning.

The bottom of the positioning recess 211 is provided with an upwardly projecting support platform 212. The support platform 212 engages with the bottom of the container assembly 100, and the support platform 212 abuts against the light-transmitting film 111, causing the light-transmitting film 111 to be tautly supported on the surface of the support platform 212, thereby ensuring that the light-transmitting film 111 remains flat and does not deform during the printing process.

The support platform 212 is designed to fit into the lid 112. The support platform 212 is inserted through the opening in the lid 112 to bear against the light-transmitting film 111, thereby tensioning it so that it is supported against the surface of the support platform 212. The height of the support platform 212 is greater than a height from the mounting end of the light-transmitting film to the bottom of the lid 112. In an embodiment, the height of the support platform 212 is slightly greater than the height from the mounting end of the light-transmitting film 111 to the bottom of the lid 112. In this embodiment, the height of the support platform 212 is slightly greater than the height of the lid 112. The support platform 212 is provided with a light-transmitting aperture and a light-transmitting support member 213 sealing the light-transmitting aperture. The light-transmitting support member 213 is inserted into the opening of the lid 112 and abuts against the light-transmitting film 111 of the light-transmitting assembly, thereby tensioning the light-transmitting film 111.

When the outer cylinder 110 is lowered into the positioning recess 211, the light-transmitting support member 213 first comes into contact with the light-transmitting film 111, before the bottom of the outer cylinder 110 come into contact with the base of the positioning recess 211. The light-transmitting film 111 is pressed upwards and tensioned, thereby allowing light to enter the build chamber 140 directly, reducing reflection and refraction. It should be noted that the mounting platform 210 is positioned opposite the limiting portion 330, with the container assembly 100 installed between the mounting platform 210 and the limiting portion 330.

In this embodiment, a cantilever storage groove is formed between the positioning platform 211 and the support platform 212. When the outer cylinder 110 is removed from the mounting platform 210, the drive unit can move the cantilever along the first direction, causing at least part of the cantilever (such as the gas outlet connector 310, sealing plates 321, first positioning structure 331, etc.) is retracted into the cantilever storage groove, thereby reducing the overall dimensions of the whole device in the first direction, which facilitates miniaturisation of the whole device.

As shown in FIG. 18, an outwardly projecting positioning protrusion 113 is provided on the outer wall of the outer cylinder 110, and the positioning protrusion 113 rests against the end face of the positioning recess 211. The clamping assembly is movably connected to the mounting platform 210. The clamping assembly is capable of moving towards the positioning protrusion 113 and pressing the positioning protrusion 113 firmly on the end face of the positioning recess 211.

The positioning protrusion 113 may be arranged circumferentially around the outer cylinder 110. Once the bottom of the outer cylinder 110 enters the interior of the positioning recess 211, the positioning protrusion 113 rests against the end face of the positioning recess 211. By moving the clamping assembly to press it against the positioning protrusion 113, the outer cylinder 110 is clamped and secured.

As shown in FIGs. 15 and 16, the clamping assembly includes at least two clamping portions 220 arranged on the outer side of the container assembly 100 to press against the positioning protrusion 113 from different positions, thereby securing the positioning protrusion 113 of the outer cylinder 110 against the end face of the positioning recess 211 on the mounting platform 210. This secures the container assembly 100 during the printing process to prevent it from wobbling and affecting the print quality.

The number of clamping portions 220 may be one, two or more. In this embodiment, there are two clamping portions 220, and the two clamping portions 220 are respectively located on opposite sides of the outer cylinder 110, thereby providing stable clamping for the container assembly 100 from both sides.

When one clamping portion 220 is provided, the clamping assembly may further include a limiting portion, with the clamping portion 220 and the limiting portion situated on opposite sides of the container assembly 100. The clamping portion 220 may clamp and secure the container assembly 100 between itself and the limiting portion, thereby providing stable clamping for the container assembly 100 from both sides.

The clamping portion 220 may be rotatably connected to the mounting platform 210, or it may be linearly slidably connected to the mounting platform 210, thereby switching between an unlocked state and a locked state.

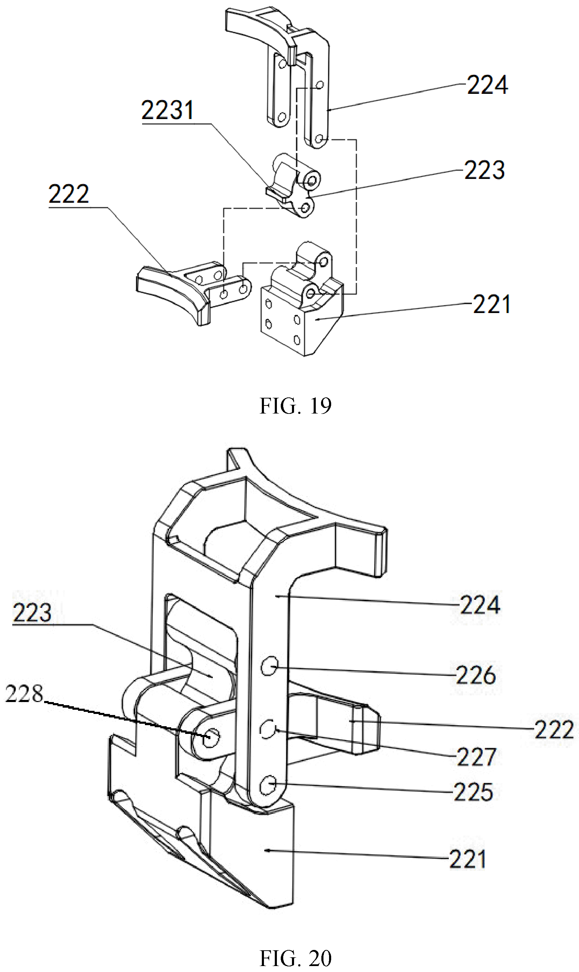

As shown in FIGs. 19-20, the clamping portion 220 includes a fixed base 221 and a clamping arm 222. The fixed base 221 is connected to the mounting platform 210. For example, the fixed base 221 may be fixedly connected to the mounting platform 210 by means of a fastener such as a screw or pin. The clamping arm 222 is rotatably connected to the fixed base 221. For example, the clamping arm 222 may be rotatably connected to the fixed base 221 via a pivot pin. The clamping arm 222 may rotate relative to the fixed base 221 so that the clamping arm 222 abuts against the outer wall of the outer cylinder 110, thereby clamping and securing the container assembly.

By way of example, the clamping arm 222 may bear solely against the outer wall of the outer cylinder 110. Alternatively, the clamping arm 222 may bear against the end of the positioning protrusion 113 away from the positioning recess 211; or, the clamping arm 222 may bear simultaneously against both the outer wall of the outer cylinder 110 and the end of the positioning protrusion 113 away from the positioning recess 211. All three of the above fixing structures can prevent the outer cylinder 110 from wobbling.

By way of example, the clamping arm 222 of this embodiment is provided with a first limiting portion, which is arcuate in shape and conformal with the outer surface of the outer cylinder 110. When the clamping arm 222 rotates relative to the fixed base 221, the first limiting portion may abut against the outer surface of the outer cylinder 110, whilst simultaneously abutting against the end of the positioning protrusion 113 away from the positioning recess 211.

The clamping portion 220 further includes a handle 224, which is rotatably connected to the fixed base 221 and also rotatably connected to the clamping arm 222. When the handle 224 rotates relative to the fixed base 221, it brings the clamping arm 222 to rotate relative to the fixed base 221. In this embodiment, the provision of the handle 224 facilitates operation by utilising the handle 224 to drive the clamping arm 222 to rotate relative to the fixed base 221.

By way of example, a second limiting portion may be provided on the handle 224. The second limiting portion is arcuate in shape and is conformal with the outer surface of the outer cylinder 110. When the handle 224 rotates relative to the fixed base 221, the second limiting portion may abut against the outer surface of the outer cylinder 110, thereby further clamping and securing the outer cylinder 110.

Furthermore, the clamping portion 220 also includes a linkage block 223, which is rotatably connected to both the clamping arm 222 and the handle 224. The handle 224 drives the clamping arm 222 to rotate relative to the fixed base 221 via the linkage block 223. When the container assembly 100 is to be clamped, the user turns the handle 224 towards the container assembly 100. The handle 224 rotates relative to the fixed base 221, driving the linkage block 223 to move, which in turn drives the clamping arm 222 to rotate towards the positioning protrusion 113 and press against it.

The fixed base 221 is connected to the handle 224 via a first hinge shaft 225; and the handle 224 is connected to the linkage block 223 via a second hinge shaft 226. The linkage block 223 is connected to the clamping arm 222 via a third hinge shaft 227; and the clamping arm 222 is rotatably connected to the fixed base 221 via a fourth hinge shaft 228. When the clamping arm 222 is fully clamped into position, the first hinge shaft 225, the second hinge shaft 226 and the third hinge shaft 227 are parallel to one another and lie in the same vertical plane; and the fourth hinge shaft 228 and the third hinge shaft 227 are parallel to one another and lie in the same horizontal plane.

When the handle 224 is rotated to a predetermined position, the first pivot shaft 225, the second pivot shaft 226 and the third pivot shaft 227 are aligned in a straight line and lock into place, thereby completing the clamping of the container assembly 100. By turning the handle 224 in the opposite direction by hand, so that the first hinge shaft 225, the second hinge shaft 226 and the third hinge shaft 227 are no longer aligned, locking can be released by turning the handle in the opposite direction.

A stop block 2231 is provided on the linkage block 223, which is configured to abut against the clamping arm 222 when the first pivot shaft 225, the second pivot shaft 226 and the third pivot shaft 227 lie in the same vertical plane. For example, it may abut against the end of the clamping arm 222 away from the positioning protrusion 113, thereby preventing the clamping arm 222 from excessively compressing the positioning protrusion 113.

When rotated to a predetermined position, the clamping arm 222 presses against the positioning protrusion 113, and the stop block 2231 is blocked by the clamping arm 222, preventing the handle 224 from rotating further. At this point, the first hinge shaft 225, the second hinge shaft 226 and the third hinge shaft 227 are aligned in a straight line and are locked in place. In this state, the clamping assembly is in a stable clamping state.

It should be noted that the clamping arm 222 is provided with a first limiting portion that mates with the container assembly 100; in this embodiment, the first limiting portion is arranged in an arc shape. Alternatively, the handle 224 may be omitted, or the handle 224 may be provided directly on the clamping arm 222. Furthermore, a second limiting portion that mates with the container assembly 100 may be provided on the handle 224, with the second limiting portion arranged in an arc shape.

When the clamping assembly is in the unlocked state, the individual clamping portions 220 open to form a clearance space avoiding the limiting portion 330, allowing the limiting portion 330 to be accommodated within the clearance space.

As shown in FIG. 16, once printing is complete and the container assembly 100 has been removed, the individual clamping portions 220 can be unfolded. A central region surrounded by the clamping portions 220 can accommodate the lowered limiting portion 330, thereby allowing the printing device to be stored in a smaller volume, facilitating storage and transport.

### Embodiment 2

The difference from Embodiment 1 lies in the manner of clamping and securing the container assembly 100.

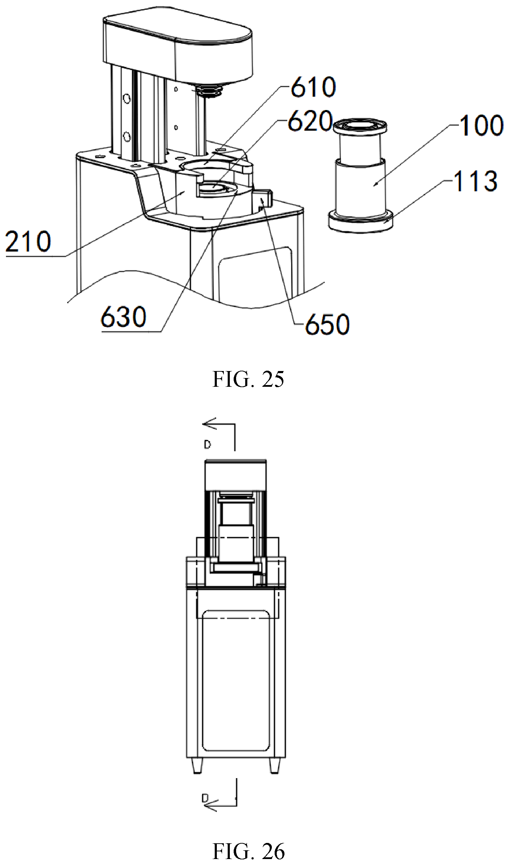

As shown in FIGs. 25 to 28, the printing device includes a mounting platform 210, which is a component that remains relatively stationary during operation. The mounting platform is provided with a first limiting member 610 and a second limiting member 620. The printing device further includes a drive mechanism for driving the second limiting member 620 to go up or down. In this embodiment, the second limiting member 620 is positioned below the first limiting member 610, and the second limiting member 620 and the first limiting member 610 are used to clamp the container assembly 100. In other feasible embodiments, the second limiting member 620 may also be positioned above the first limiting member 610.

As shown in FIG. 25, the container assembly 100 moves towards the first limiting member 610 under the actuation of the second limiting member 620, so that the container assembly 100 is clamped between the first and second limiting members. A support portion 630 may also be provided on the mounting platform 210, situated below the first limiting member 610. The support portion 630 is provided with a through-hole for the second limiting member 620 to pass through. The user may first place the container assembly 100 horizontally between the support portion 630 and the first limiting member 610, and then the second limiting member 620 is caused to pass through the through-hole and push up the container assembly 100. In other possible embodiments, the support portion 630 may be omitted, and the container assembly 100 may be supported directly by the second limiting member 620.

The outer wall of the outer cylinder 110 is provided with an outwardly projecting positioning protrusion 113. The second limiting member 620 and the first limiting member 610 are configured to clamp the positioning protrusion 113. For example, the second limiting member 620 and the first limiting member 610 may respectively abut against both ends of the positioning protrusion 113. A clamping force is applied to the locating protrusion 113 to achieve positioning of the container assembly 100; this manner of positioning does not compress the outer cylinder 110, thereby preventing damage to the container assembly 100.

A horizontal limiting structure includes a U-shaped limiting surface, the opening of which faces the same direction as a horizontal opening. The U-shaped limiting surface includes a first plane, a curved surface and a second plane connected in sequence, with the first plane and the second plane being parallel.

The positioning protrusion 113 is inserted horizontally between the first plane and the second plane, and then pushed laterally until the positioning protrusion 113 abuts against the curved surface, thereby completing the horizontal positioning of the container assembly. At this time, the light-transmitting assembly of the container assembly is coaxial with the light-transmitting aperture on the second limiting member 620.

The drive mechanism may be operated in various ways, either manually or automatically; in some feasible embodiments, an electric linear actuator may be used to drive the second limiting member 620 up and down.

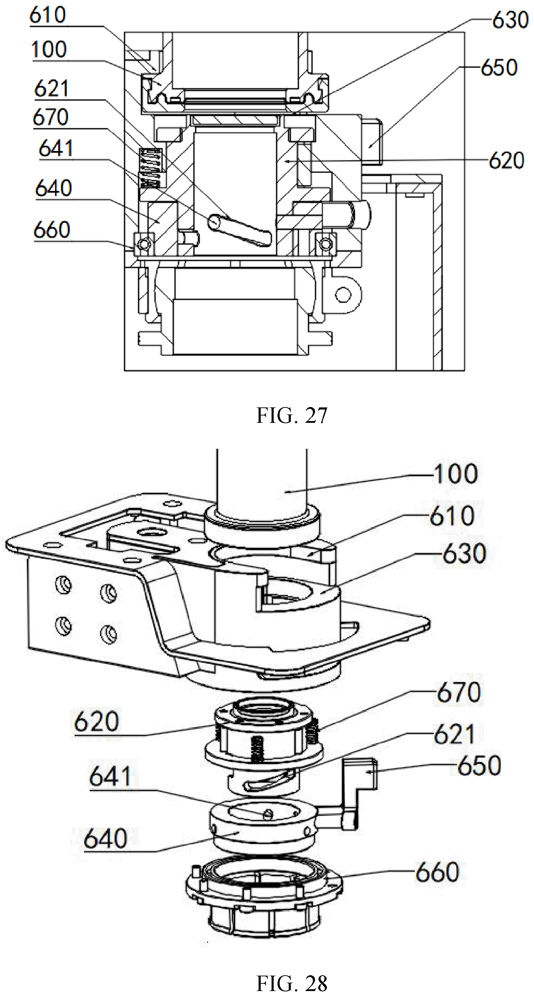

As shown in FIGs. 27 and 28, in this embodiment, the drive mechanism includes a rotating member 640 rotatably connected to the mounting platform 210. The rotating member 640 is capable only of rotational movement; and its rotation axis extends vertically. The rotating member 640 is annular in shape, fitted around the outer circumference of the second limiting member 620.

A guiding block 641 is provided on one of the rotating member 640 and the second limiting member 620, whilst a guiding groove 621 is provided on the other. The guiding groove 621 extends in a helical manner, and the guiding block 641 is slidably connected within the guiding groove 621. By means of the aforementioned structure, when the rotating member 640 is rotated, it can move along the guiding groove 621, thereby driving the second limiting member 620 to move up and down.

The rotating member 640 is provided with a guiding block 641 that protrudes towards the inner side of the annular rotating member. The circumferential side wall of the second limiting member 620 is provided with a guiding groove 621 extending helically in a vertical direction, with the guiding block 641 slidably connected within the guiding groove 621. In other feasible embodiments, the guiding groove 621 may be provided on the rotating member 640, whilst the guiding block 641 may be provided on the second limiting member 620.

A guide column is provided between the second limiting member 620 and the mounting platform 210, thereby restricting the second limiting member to vertical movement only and preventing rotation. When the rotating member 640 is rotated, it moves along the helical guiding groove 621, thereby driving the second limiting member 620 to move vertically up and down.

A handle 650 may be connected to the rotating member 640; by means of the handle 650, the user can manually rotate the rotating member 640 to achieve the vertical movement of the second limiting member 620. Of course, the rotation of the rotating member 640 may also be achieved by means of a motor.

A plurality of guiding grooves 621 and a plurality of guiding blocks 641 may be provided with a one-to-one correspondence, thereby ensuring the movement of the second limiting member 620 is stable and reducing wobbling.

A first bearing 660, for example a ball bearing 660, is provided between the rotating member 640 and the mounting platform 210, thereby enhancing the smoothness of rotation of the rotating member 640.

An elastic return member is provided between the mounting platform 210 and the second limiting member 620. The elastic return member may be a spring 670. The lower end of the spring 670 is connected to the second limiting member 620, whilst its upper end abuts against the bottom surface of the support portion 630 when the container assembly 100 is clamped, remaining in a compressed state. Upon unlocking, the spring 670 releases its elastic force, allowing the second limiting member 620 to descend more easily.

The second limiting member 620 is provided with an upwardly projecting support platform 212, the function of which is the same as in Embodiment 1, serving to tension the light-transmitting film 111; further details are omitted.

The printing system provided by the present application includes a system host and the aforementioned container assembly 100. The specific structure of the container assembly 100 is described in the aforementioned container assembly 100 and will not be repeated here. The container assembly 100 is a disposable item. After completing a single print, it is replaced with a new container assembly 100.

The system host may be the aforementioned printing device. For the specific structure of the printing device, please refer to the description of the printing device provided above, which will not be repeated in detail here. It may also be a host capable of performing printing functions as found in the related art. That is, both the container assembly 100 and the aforementioned printing device may be protected individually. The printing system formed by combining the two may also be protected. Furthermore, the printing system formed by combining the aforementioned container assembly 100 with an existing printing device is also within the scope of protection.

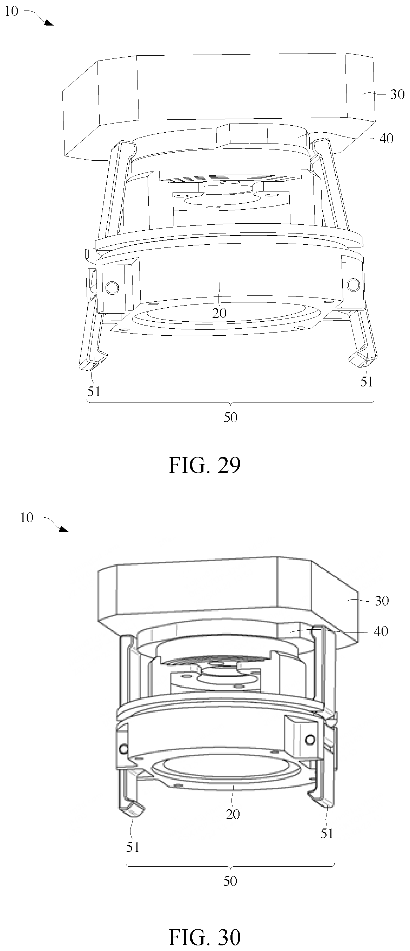

Referring to FIGs. 29 and 30, embodiments of the present application further provide a locking device 10, mounted on the aforementioned limiting mechanism 400. In an embodiment, it may be mounted on the cantilever 710. The locking device 10 may include a base 20, a drive assembly 30, a rotating portion 40, and a snap latching assembly 50. In one possible embodiment, the drive assembly 30 may be mounted on the base 20, whilst the rotating portion 40 may be positioned between the drive assembly 30 and the base 20. The rotating portion 40 may be in driving connection with the drive assembly 30, and the rotating portion 40 may be rotatably mounted on the base 20. Referring to FIG. 30, the snap latching assembly 50 is rotatably connected to the outer surface of the base 20, and one end of the snap latching assembly 50 is in contact with the outer contour 41 of the rotating portion 40.

It will be understood that the drive assembly 30 is capable of driving the rotating portion 40 to perform rotational movement. During the rotation of the rotating portion 40, it drives the snap latching assembly 50 to rotate. The snap latching assembly 50 during rotation opens or closes, causing the snap latching assembly 50 to open and close in tandem with the rotational movement of the outer contour 41 of the rotating portion 40, thereby achieving a locking or unlocking action.

Thus, the locking device 10 provided by the embodiments of the present application drives the rotating portion 40 to rotate via the drive assembly 30, thereby causing the snap latching assembly 50 to open or close, to achieve a locked or unlocked state of the platform assembly 120. Furthermore, the platform assembly 120 does not need the provision of magnetic components, thereby reducing costs.

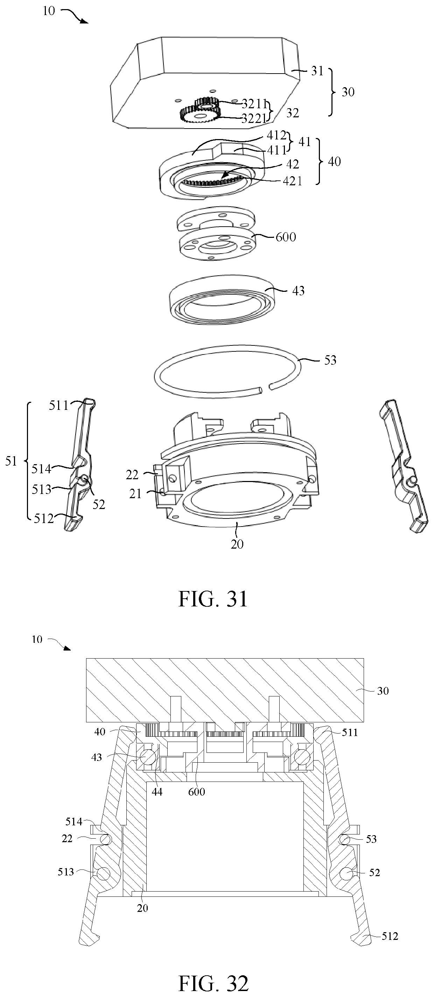

Referring to FIG. 31, based on the aforementioned embodiment, the outer contour 41 of the rotating portion 40 may include a first contour section 411 and a second contour section 412. In one possible embodiment, the number of first contour section 411 and the second contour section 412 may each be two; however, the embodiments of the present application are not limited thereto. In the embodiments of the present application, the two first contour sections 411 may be arranged opposite one another, and correspondingly, the two second contour sections 412 may be arranged opposite one another. The first contour sections 411 and the second contour sections 412 are connected to form the outer contour 41 of the rotating portion 40.

Referring again to FIG. 31, based on the aforementioned embodiment, the first contour sections 411 or the second contour sections 412 are arranged to project radially from the rotating portion 40. In one possible embodiment, the first contour sections 411 may be arranged to project radially from the rotating portion 40. Alternatively, in another possible embodiment, the second contour sections 412 may be arranged to protrude in the radial direction of the rotating portion 40. The embodiments of the present application are not limited to this.

In the embodiments of the present application, the first contour sections 411 projecting radially from the rotating portion 40 are provided as an example. It will be understood that when the rotating portion 40 is rotated such that the first contour sections 411 come into contact with the snap latching assembly 50, the snap latching assembly 50 is in a closed state, thereby locking the platform assembly 120. Correspondingly, when the rotating portion 40 is rotated such that the second contour sections 412 come into contact with the snap latching assembly 50, the snap latching assembly 50 is in an open state, thereby unlocking the platform assembly 120. In this way, the shapes of the first contour sections 411 and the second contour sections 412 can be adapted to the opening and closing movement trajectory of the snap latching assembly 50, and the snap latching assembly 50 is caused to open and close by the rotational movement of the rotating portion 40.

In one possible embodiment, by way of example, the rotating portion 40 may be a cam structure. The embodiments of the present application are not limited thereto.

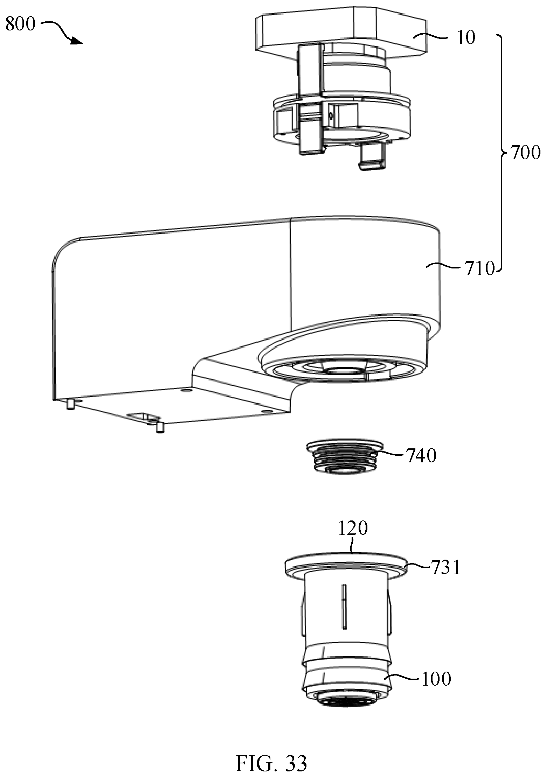

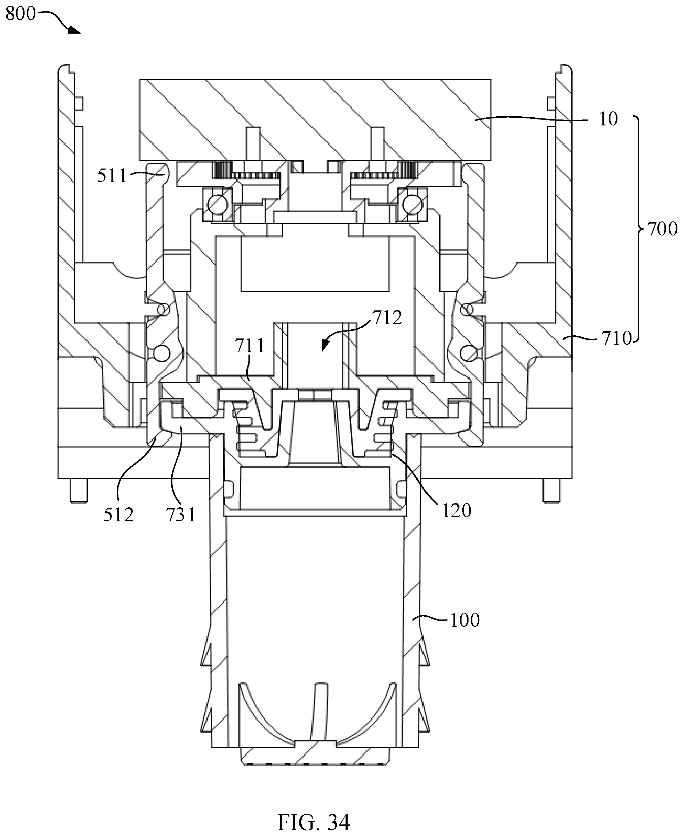

Referring to FIGs. 33 and 34, based on the aforementioned embodiments, the locking device 10 is mounted in the cantilever 710. The locking device 10 is adapted to engage with a positioning portion 711 of the cantilever 710. In this configuration, the positioning portion 711 can be axially engaged with the platform assembly 120, whilst the snap latching assembly 50, when closed, can engage with the platform assembly 120, thereby securing the platform assembly 120.

In one possible embodiment, a clearance area may be provided in the base 20. A gas supply module may be provided within the cantilever, and a vent hole 712 may be formed in the positioning portion. It is understood that, when the locking device 10 is mounted on the positioning portion 711, the clearance area serves to allow the vent hole 712 in the positioning portion 711 to communicate with the gas supply module on the cantilever 710.

Referring further to FIGs. 29 and 30, based on the aforementioned embodiments, by way of example, the snap latching assembly 50 may include a male latch or a female latch. The snap latching assembly 50 may further include latch hooks 51. In one possible embodiment, the number of latch hooks 51 may be at least two. The embodiments of the present application do not impose any limitation on the number of latch hooks 51. In the embodiments of the present application, two latch hooks 51 are used as an example. As shown in FIG. 30, the two latch hooks 51 are evenly distributed in the circumferential direction on the outer surface of the base 20, and each latch hook 51 may have a force-receiving end 511 and a locking end 512. The force-receiving end 511 is configured to contact the outer contour 41 of the rotating member, whilst the locking end 512 is configured to engage with the platform assembly 120.

In the embodiments of the present application, it is understood that when the force-receiving ends 511 are in contact with the first contour sections 411, the locking ends 512 are closed inwards and are in a locked state. Conversely, when the force-receiving ends 511 are in contact with the second contour sections 412, the locking ends 512 are opened outwards and are in an unlocked state.

Referring again to FIG. 31, based on the aforementioned embodiments, through-holes 21 may be formed in the base 20, whilst a first mounting slot 513 may be formed in each latch hook 51. The through-holes 21 may be positioned correspondingly to the first mounting slots 513. In one possible embodiment, a pivot shaft 52 may be provided, passing sequentially through a first mounting slot 513 and a through-hole 21, with the latch hook 51 being mounted on the pivot shaft 52 to rotate, thereby enabling the latch hook 51 to be rotationally connected to the base 20 via the pivot shaft 52.

Referring again to FIG. 31, based on the aforementioned embodiments, the locking device 10 may further include: an elastic member 53. The elastic member 53 may be positioned between the base 20 and the latch hook 51. In the embodiments of the present application, it is understood that the elastic member 53 serves to provide an elastic force in the inward direction of the force-receiving end 511, thereby causing the locking end 512 to tend towards an open state.

Referring again to FIG. 31, based on the aforementioned embodiments, in one possible configuration, a second mounting slot 514 may also be formed on the latch hook 51, whilst a third mounting slot 22 may be formed on the base 20. It will be understood that the second mounting slot 514 and the third mounting slot 22 are arranged correspondingly to each other. In the embodiments of the present application, the elastic member 53 may be positioned within the third mounting slot 22 of the base 20 and engage with the second mounting slot 514 on the latch hook 51.

In one possible embodiment, the elastic member 53 may be an elastic band, a spring or a rubber member. The embodiments of the present application are not limited thereto.

When the elastic member 53 is a spring, the spring may be positioned within the third mounting slot 22 of the base 20, with both ends of the spring connecting the bottom wall of the third mounting slot 22 and the corresponding wall surface of the second mounting slot 514 on the latch hook 51 respectively, thereby providing the latch hook 51 with an elastic preload force perpendicular to the base 20.

When the elastic member 53 is an elastic band, at least a portion of the elastic band may be positioned within the second mounting slot 514 of the latch hook 51, clamping against the wall surface of the second mounting slot 514 by virtue of its own radial elastic tension, thereby providing a radial clamping force to the latch hook 51.

Referring again to FIG. 31, based on the aforementioned embodiments, the drive assembly 30 may include a drive unit 31 and a transmission assembly 32. One end of the transmission assembly 32 may be connected to the drive unit 31, whilst the other end of the transmission assembly 32 may be connected to the rotating portion 40, thereby enabling the drive unit 31 to be connected to the rotating portion 40 via the transmission assembly 32. In one possible implementation, the drive unit 31 may be a motor. The embodiments of the present application are not limited thereto.

Referring further to FIG. 31, based on the aforementioned embodiment, in one possible implementation, the transmission assembly 32 may further include a first transmission member 3211 and a second transmission member 3221, where the first transmission member 3211 and the second transmission member 3221 are rotatably connected to the drive unit 31. In the embodiments of the present application, it is understood that the drive unit 31 is capable of driving the first transmission member 3211 to rotate, thereby causing the second transmission member 3221 to rotate via the first transmission member 3211.

Referring again to FIG. 31, based on the aforementioned embodiment, the rotating portion 40 may further include a through-hole 42. A third transmission member 421 may be provided on the wall of the through-hole 42. In one possible implementation, the third transmission member 421 may be arranged circumferentially along the wall of the through-hole 42. In the embodiments of the present application, the third transmission member 421 may be in driving connection with the second transmission member 3221. It will be understood that when the drive unit 31 drives the first transmission member 3211 to rotate, this causes the second transmission member 3221 to rotate, which in turn drives the entire rotating portion 40 to rotate via the third transmission member 421.

In one possible implementation, the first transmission member 3211, the second transmission member 3221 and the third transmission member 421 may all be gear structures. The embodiments of the present application are not limited thereto. In the embodiments of the present application, the first transmission member 3211 may be connected to the second transmission member 3221 by meshing, and the second transmission member 3221 may also be connected to the third transmission member 421 by meshing.

Referring again to FIG. 31, building upon the aforementioned embodiments, in one possible configuration, the third transmission member 421 may be rotatably connected to the base 20 via a second bearing 43. In the embodiments of the present application, as shown in FIG. 32, a stepped portion 44 may be provided on the rotating portion 40. It will be understood that the inner side of the second bearing 43 may engage with the stepped portion 44, whilst the outer side of the second bearing 43 may engage with the base 20, thereby allowing the second bearing 43 to be positioned between the rotating portion 40 and the base 20, facilitating rotation of the rotating portion 40.

Referring again to FIG. 31, based on the aforementioned embodiments, the locking device 10 may further include: an adapter 600. In one possible implementation, the number of adapter 600 may be one or more. The embodiments of the present application are not limited in this respect. In the embodiments of the present application, one end of the adapter 600 may be inserted through the through-hole 42 of the rotating portion 40 and fixedly connected to the drive member 31. Additionally, the other end of the adapter 600 may be fixedly connected to the base 20.

Referring to FIGs. 33 and 34, a second aspect of the present application provides a printing device 700. The printing device 700 may include a cantilever 710 and the aforementioned locking device 10. In this embodiment, it is understood that the locking device 10 is capable of locking or unlocking the platform assembly 120.

In this embodiment of the present application, it is understood that the cantilever 710 moves up and down. By securing the platform assembly 120 via the locking device 10, the cantilever 710 drives the platform assembly 120 to move up and down synchronously.

The locking device 10 is disposed within the cantilever 710. The base 20 is mounted on the positioning portion 711, and the latch hooks 51 extend beyond the positioning portion 711, cooperating with the positioning portion 711 to form a latch slot for positioning the platform assembly 120. The end of the platform assembly 120 features a protrusion 731. In one possible implementation, the end of the platform assembly 120 facing the locking device 10 has the protrusion 731, which extends outwards along the transverse direction of the platform assembly 120 and is positioned within the latch slot. Of course, a latch slot may also be provided on the platform assembly 120, with the latch hooks 51 positioned within the latch slot.

In the printing device 700, an integrated gas injecting mechanism is provided to supply gas to the platform assembly 120. Specifically, the gas injecting mechanism is housed within the cantilever 710. The gas outlet of this gas injecting mechanism is directed to the positioning portion 711 at the end of the cantilever 710.

A vent hole 712 is formed in the positioning portion 711. This vent hole 712 serves as an outlet for the gas and is connected to the gas injecting mechanism, thereby forming a complete, sealed gas delivery path from the gas source to the interface. In one implementation, the positioning portion 711 is provided with a gas outlet connector, and the vent hole 712 is formed in the gas outlet connector. The gas outlet connector engages with the gas inlet interface.

When the locking device 10 securely locks the platform assembly 120 onto the cantilever 710, it simultaneously ensures that the corresponding gas inlet interface on the platform assembly 120 is precisely aligned with and reliably sealed against the vent hole 712 on the positioning portion 711 of the cantilever 710. This allows gas from the gas injecting mechanism to be delivered through the vent hole 712 to the platform assembly 120, and subsequently to the printing chamber formed by the platform assembly 120 in conjunction with the container assembly 100, thereby completing a specific printing process.

Referring again to FIGs. 33 and 34, a third aspect of the present application provides a printing system 800. The printing system 800 may include the aforementioned printing device 700, a container assembly 100, and a platform assembly 120. The platform assembly 120 is connected to the container assembly 100, and the locking mechanism 10 of the printing device 700 is used to lock or unlock the platform assembly 120. In one possible implementation, one end of the platform assembly 120 is connected to the container assembly 100, whilst the other end of the platform assembly 120 engages with the positioning portion 711 of the cantilever 710.

Referring again to FIG. 34, based on the aforementioned embodiments, the end of the platform assembly 120 includes a projection 731. In one possible implementation, the end of the platform component 120 facing the locking device 10 includes a protrusion 731, which is arranged to project outwards in the transverse direction of the platform assembly 120; specifically, the protrusion 731 is arranged to project in the radial direction of the platform assembly 120. By way of example, the protrusion 731 may be a flange rim. The embodiments of the present application are not limited thereto.

Thus, in the embodiments of the present application, when the locking device 10 is in the locked state, the locking end 512 of the snap latching assembly 50 of the locking device 10 is capable of clamping the protrusion 731 of the platform assembly 120, thereby locking onto the platform assembly 120. Accordingly, when the locking device 10 is in the unlocked state, the locking end 512 of the snap latching assembly 50 of the locking device 10 can disengage from the protrusion 731 of the platform assembly 120, thereby unlocking from the platform assembly 120.

Referring further to FIG. 33, based on the aforementioned embodiment, the printing device 700 may further include a buffer member 740. The buffer member 740 may be mounted on the cantilever 710. It will be understood that the buffer member 740 serves to provide an air seal and to provide elasticity when the snap latching assembly 50 is engaged. In one possible implementation, the buffer member 740 may be a rubber member. The embodiments of the present application are not limited thereto.

The platform assembly 120 comes into contact with the cantilever 710, and the drive unit 31 in the locking device 10 begins to rotate, sequentially driving the first transmission member 3211, the second transmission member 3221, the third transmission member 421 and the rotating member to rotate. The first contour sections 411 of the rotating portion 40 gradually engage with the force-receiving ends 511 of the latch hooks 51, causing the locking ends 512 of the latch hooks 51 to retract inwards and thereby clamping the protrusion 731 of the platform assembly 120, thus locking the platform assembly 120.

The drive unit 31 in the locking device 10 continues to rotate, sequentially driving the first transmission member 3211, the second transmission member 3221, the third transmission member 421 and the rotating member to perform rotational movement. The second contour sections 412 of the rotating portion 40 gradually engage with the force-receiving ends 511 of the latch hooks 51, and under the action of the elastic member 53, the force-receiving ends 511 are caused to close inwards, thereby causing the locking ends 512 to open, thus unlocking the platform assembly 120.

In the embodiments of the present application, the platform assembly 120 may be connected to the container assembly 100. The printing process of the printing device 700 is as follows. Light from a light source passes through the container assembly 100 to irradiate the liquid resin in accordance with a slice pattern. The resin in the irradiated area cures and adheres firmly to the platform assembly 120 or to a previously cured layer, thereby achieving exposure and curing. Subsequently, the platform assembly 120 is raised, separating the new cured layer from the bottom of the container assembly 100. After the platform assembly 120 is raised, the liquid resin flows again, thereby continuing to spread into a uniform thin layer. Finally, the above steps are repeated until the entire object is printed.

In one possible embodiment, the container assembly 100 is a container assembly 100 containing resin; however, it may also be a container assembly 100 not containing resin. The embodiments of the present application are not limited thereto.

Platform assembly 120 should be stored away from light. When not in use, it can be kept in a storage container and taken out from the container when to be used, before being installed into container assembly 100.

In the embodiments of the present application, the locking device 10 drives the snap latching assembly 50 to rotate by means of the drive assembly 30, thereby causing the snap latching assembly 50 to open and close, so as to achieve a locked or unlocked state of the container assembly 100. Furthermore, the container assembly 100 does not require the provision of magnetic components, thereby reducing costs.

In one possible embodiment, the limiting portion 330 may be provided with a gripping unit, which is capable of moving towards or away from the container assembly in a vertical direction to grip or release the platform assembly 120. The gripping unit may be the locking device 10.

By way of example, the gripping unit may be designed in the form of a mechanical gripper, a latch, an electromagnetic chuck or a vacuum chuck. When the gripping unit employs a mechanical gripper, it may include gripping arms capable of opening and closing relative to one another, with the opening and closing motion of the gripping arms driven by a motor or a pneumatic cylinder.

The limiting portion 330 drives the gripping unit to move vertically towards the container assembly 100 as a whole, aligning the gripping unit with the platform assembly 120. Then the gripping arms of the gripping unit close to clamp the platform assembly 120. Conversely, when separation is desired, the gripping arms open to release the platform assembly 120, and the limiting portion 330 moves the gripping unit away, ensuring that the ascent and descent of the platform assembly 120 are both actively driven directly by the limiting portion 330 via the gripping unit, thereby achieving a motorised drive mode.

The gripping unit may be positioned on the side of the limiting portion 330 facing the container assembly 100, and may be provided with a guiding or positioning structure to ensure accurate alignment with corresponding structures on the platform assembly 120 during gripping and to maintain a stable connection.

By incorporating a limiting portion 330 with a gripping unit, the printing device 700 is able to mechanically grip and drive the platform assembly 120 directly and reliably, enabling precise reciprocating linear motion. This ensures a high degree of accuracy and repeatability in layer thickness control during the printing process. It provides more stable and reliable drive and positioning assurance when precise downward repositioning is required or when dealing with high-viscosity materials, thereby enhancing the control precision and process stability of the entire printing system 800.

### Embodiment 3

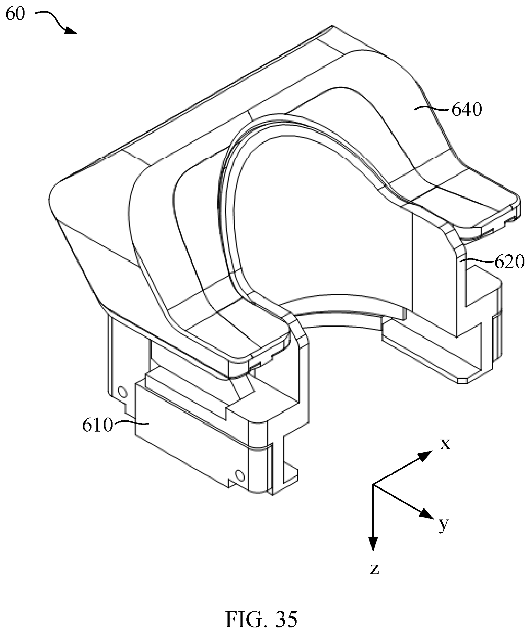

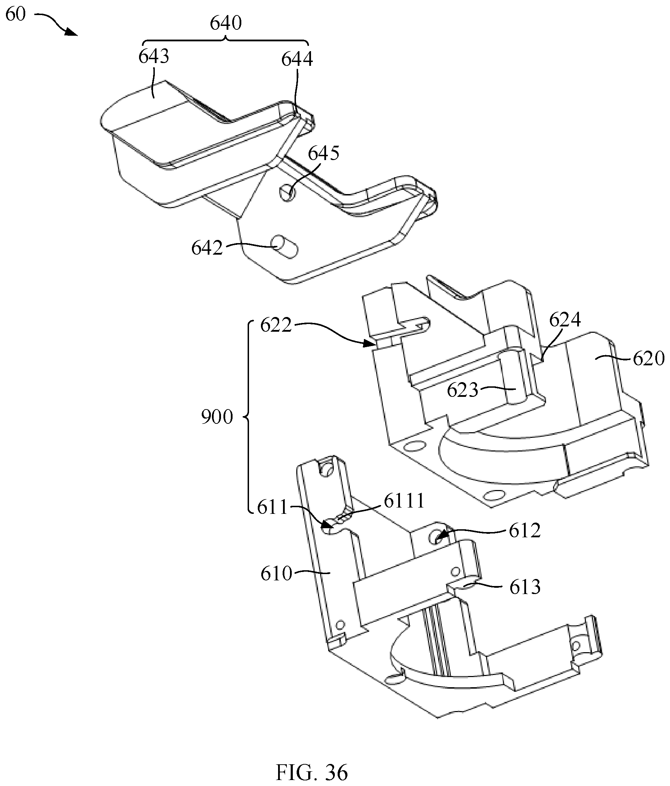

With reference to FIGs. 35 and 36, the present application provides a locking structure 60. The locking structure 60 may include a first limiting member 610, a second limiting member 620, and a rotating member 640. In this embodiment of the present application, the second limiting member 620and the first limiting member 610 are opposite to each other along a first direction, thereby forming a clamping space between the first limiting member 610 and the second limiting member 620 for accommodating the container assembly 100. Furthermore, the rotating member 640 is adapted to drive at least one of the first limiting member 610 and the second limiting member 620, thereby enabling relative movement between the first limiting member 610 and the second limiting member 620 along the first direction, to jointly clamp or release the container assembly 100 placed within the clamping space.

Based on the above embodiment, the rotating member 640 may be provided with an operating portion. In the embodiments of the present application, the operating portion may be configured to allow the user to perform single-point operation by flicking or pressing the operating portion with one hand, thereby driving the rotating member 640 to move and achieving the locking or unlocking of the container assembly 100.

In one possible implementation, the first limiting member 610 is fixedly mounted, whilst the second limiting member 620 is slidably connected to the first limiting member 610.

It will be understood that the second limiting member 620 is provided with a mounting structure for mounting the container assembly 100, and the second limiting member 620 is capable of sliding to drive the container assembly 100 to move back and forth. When the second limiting member 620 slides in a direction away from the printing device 700, the container assembly 100 may be mounted onto the mounting structure or removed from the second limiting member 620. When the second limiting member 620 slides towards the printing device 700, the container assembly 100 is moved to a working position. At this time, a glass base on the printing device 700 abuts against the bottom of the container assembly 100 and presses against the light-transmitting film of the container assembly 100, thereby cooperating with the second limiting member 620 to achieve the positioning and locking of the container assembly 100.

In the embodiments of the present application, the rotating member 640 may be positioned on the second limiting member 620, and the rotating member 640 may be rotatably connected to the first limiting member 610. By rotating the rotating member 640, the second limiting member 620 can be driven to slide up and down relative to the first limiting member 210, thereby achieving the loading, locking and unloading of the container assembly 100.

Based upon the aforementioned embodiments, the rotational movement of the rotating member 640 about a horizontal axis can enable a relative movement between the first limiting member 610 and the second limiting member 620.

Referring further to FIG. 36, based upon the aforementioned embodiments, in one possible configuration, a first shaft 642 may be provided on the rotating member 640, whilst a passage 900 may be formed between the second limiting member 620 and the first limiting member 610. In the embodiments of the present application, it is understood that the passage 900 allows the first shaft 642 to extend into and move therein. On the one hand, it serves to guide and limit the first shaft 642 in place, and on the other hand, it provides clearance for the movement of the first shaft 642. Through the rotation and displacement of the first shaft 642 within the passage 900, the second limiting member 620 can be driven to slide back and forth along the first direction relative to the first limiting member 610.

Thus, with the locking structure 60 provided by the embodiments of the present application, rotation of the rotating member 640 drives the second limiting member 620 to move up and down, thereby achieving the locked or unlocked state of the container assembly 100. The first limiting member 610, the second limiting member 620 and the rotating member 640 are integrated as a module. Simply mounting the first limiting member 610 onto the device body completes the installation of the locking structure 60. Once installed, the locking structure 60 allows a container assembly to be locked onto the device body or a container assembly already mounted on the device body to be unlocked and removed from it. Both installation and operation are highly convenient, and maintenance is also straightforward, significantly enhancing efficiency and reducing costs. Furthermore, the locking structure 60 includes only the first limiting member 610, the second limiting member 620 and the rotating member 640. With a small number of components, the cost is low and disassembly, assembly and maintenance are straightforward.

In one possible implementation, the container assembly 100 may be a storage tank containing liquid resin; however, the embodiments of the present application are not limited thereto.

It should be noted that, for the sake of convenience of description, in the embodiments of the present application, the first direction may be the height direction of the first limiting member 610, i.e. the z-direction in FIG. 35. A second direction may be the length direction of the first limiting member 610, i.e. the x-direction in FIG. 35. A third direction may be the width direction of the first limiting member 610, i.e. the y-direction in FIG. 35.

Referring further to FIG. 36, based upon the aforementioned embodiments, in one possible implementation, a first slot 611 may be formed in the first limiting member 611, and correspondingly, a second slot 622 may be formed in the second limiting member 620. The first slot 611 and the second slot 622 may form the passage 900, thereby allowing the first shaft 642 to move within the passage 900. In another possible implementation, the passage 900 may be formed solely by the second slot 622, i.e. the passage 900 may be provided only on the second limiting member 620. In the embodiments of the present application, it is understood that by rotating the rotating member 640, the first shaft 642 is driven to move within the passage 900. During the rotation of the first shaft 642, the second limiting member 620 is driven to slide back and forth along the first limiting member 610 in the first direction, thereby achieving the locked or unlocked state of the container assembly 100.

Referring further to FIG. 36, based upon the aforementioned embodiments, in one possible configuration, a protrusion 6111 may be provided on the first slot 611. By way of example, the protrusion 6111 may include, but is not limited to, a protrusion, a ridge, or other raised, projecting or limiting portion. It is understood that the protrusion 6111 serves to form a motion dead point. The protrusion 6111 may cooperate with a wall of the first slot 611 to form a limiting zone. In the embodiments of the present application, when the first shaft 642 moves within the first slot 611 until it comes into contact with the protrusion 6111, a certain force is to be applied to pass over the protrusion 6111. Once the protrusion 6111 is passed, the first shaft 642 enters the limiting zone, thereby achieving stable locking of the container assembly 100. Alternatively, when the first shaft 642 passes over the protrusion 6111 and exits the limiting zone, it may move within the passage 900, causing the second limiting member 620 to drive the container assembly 100 to move, thereby switching to an unlocked or other state. In this way, the mechanical limiting provided by the first slot 611 and the protrusion 6111 ensures that the range of motion of the second limiting member 620 is controlled, thereby maintaining a stable locked state. Furthermore, the design of the protrusion 6111 prevents unintended movement of the second limiting member 620, enhancing the positioning accuracy of the container assembly 100.

Referring again to FIG. 36, based on the aforementioned embodiments, the rotating member 640 may further include a rotating body 643. The rotating body 643 may be adapted to the outer surface of the second limiting member 620. In one possible implementation, the surface of the rotating body 643 facing the second limiting member 620 may be curved, thereby encircling the outer periphery of the container assembly 100. The embodiments of the present application are not limited to this.

Furthermore, the first shaft 642 is positioned below the rotating body 643, and an orthographic projection of the rotating body 643 on the first limiting member 610 in the first direction overlaps that of the first shaft 642 on the first limiting member 610. Thus, viewed from the top, the rotating body 643 completely covers the first shaft 642, thereby shielding the passage 900 along the first direction, which to some extent helps prevent dust accumulation within the locking structure 60.

Referring further to FIG. 36, based on the aforementioned embodiments, the rotating member 640 may further include protruding ends 644. In one possible implementation, a number of protruding ends 644 may be one or more. The embodiments of the present application place no restriction on the number of protruding ends 644. In the embodiments of the present application, two protruding ends 644 are illustrated by way of example. The two protruding ends 644 are arranged on both ends of the rotating body 643 along the second direction, and each protruding end 644 extends along the third direction. It will be understood that the user may operate the protruding ends 644 to drive the entire rotating member 640 to move, thereby causing the second limiting member 620 to slide back and forth along the first limiting member 210 in the first direction, thus achieving the locked or unlocked state of the container assembly 100.

It will be understood that the protruding ends 644 of the rotating member 640 may serve as the operating portion, thereby allowing the user to perform single-point operation by pressing the protruding ends 644 with one hand, thus driving the entire rotating member 640 to move.

Referring further to FIG. 36, based on the aforementioned embodiments, one of the rotating member 640 and the first limiting member 610 may be provided with a second shaft 645, whilst the other of the rotating member 640 and the first limiting member 610 may be provided with a mounting hole 612. By way of example, the mounting hole 612 may include a through-hole or a blind hole. In the embodiments of the present application, it is understood that the second shaft 645 may engage with the mounting hole 612, thereby enabling the rotating member 640 to be rotationally connected to the first limiting member 610. When the rotating member 640 rotates relative to the first limiting member 610, the first shaft 642 rotates along with it, thereby driving the second limiting member 620 to move along the first direction on the first limiting member 610.

In one possible implementation, the rotating member 640 may be provided with the second shaft 645, whilst the first limiting member 610 may be provided with the mounting hole 612. Alternatively, in another possible implementation, the rotating member 640 may be provided with the mounting hole 612, whilst the first limiting member 610 may be provided with the second shaft 645. It will be understood that the second shaft 645 and the mounting hole 612 are arranged in a corresponding manner. The embodiments of the present application are not limited to this.

Referring further to FIG. 36, based upon the aforementioned embodiments, in one possible implementation, the second limiting member 620 may be provided with a first guiding portion 623, and correspondingly, the first limiting member 610 may be provided with a second guiding portion 613 that engages with the first guiding portion 623. In a possible implementation, the first guiding portion 623 and the second guiding portion 613 may be arranged in at least two or more groups and provided in a distributed manner. In the embodiments of the present application, if the second limiting member 620 is a cylindrical container, the first guiding portions 623 and the second guiding portions 613 may be distributed circumferentially in a uniform manner. If the second limiting member 620 is a square container, the first guiding portions 623 and the second guiding portions 613 may be arranged in a peripherally distributed manner. In the embodiments of the present application, it is understood that by mating of multiple groups of dispersed first guiding portions 623 and second guiding portions 613, the second limiting member 620 is enabled to slide back and forth along the first direction on the first limiting member 610.

In one possible implementation, the first guiding portion 623 may be located on at least a portion of the outer surface of the second limiting member 620; correspondingly, the second guiding portion 613 may be located on at least a portion of the inner surface of the first limiting member 610. It will be understood that the first guiding portions 623 and the second guiding portions 613 may be arranged in a corresponding manner, thereby enabling the first guiding portions 623 and the second guiding portions 613 to mate with one another and function as a track, facilitating the upwards and downwards sliding of the second limiting member 620 along the first direction.

Referring again to FIG. 36, based upon the aforementioned embodiments, in one possible implementation, the first guiding portion 623 may be at least one of a groove, a hole or a rib. Accordingly, the second guiding portion 613 may be at least one of a rib, a post or a groove capable of slidingly engaging with the first guiding portion 623. Alternatively, the second guiding portion 613 may be at least one of a groove, a hole or a rib. Accordingly, the first guiding portion 623 may be at least one of a rib, a post or a groove capable of slidingly engaging with the first guiding portion 623.

By way of example, when the first guiding portion 623 is a groove, the second guiding portion 613 may be a rib engaging with that groove. When the first guiding portion 623 is a hole, the second guiding portion 613 may be a post inserted into the hole. When the first guiding portion 623 is a rib, the second guiding portion 613 may be a groove that engages with the rib. The embodiments of the present application do not impose any restrictions on the specific forms of the first guiding portion 623 and the second guiding portion 613, provided that the two can engage with one another and achieve sliding guidance.

In the embodiments of the present application, by way of example, the first guiding portion 623 may be at least one of a groove, a hole or a rib, and the second guiding portion 613 may be at least one of a rib, a post or a groove that slidably engages with the first guiding portion 623.

Based upon the above embodiments, in one possible implementation, an elastic member (not shown in the figures) may be provided between the first guiding portion 623 and the second guiding portion 613. In the embodiments of the present application, it is understood that the elastic member may be used to provide a certain amount of elastic force, thereby facilitating the return of the second limiting member 620 to its initial position, making the locking or unlocking action of the locking structure 60 smoother and optimising the user's tactile experience.

By way of example, the elastic member may be a spring or a rubber member. The embodiments of the present application are not limited thereto.

In another possible implementation, with reference to FIGs. 25, 26, 27 and 28, the locking structure 60 may be provided on the mounting platform 210 of the printing device 700. The mounting platform 210 is a component that remains relatively stationary during operation. The mounting platform 210 is provided with the first limiting member 210 and the second limiting member 620, where the second limiting member 620 is positioned below the first limiting member 610, and the second limiting member 620 and the first limiting member 210 are used to clamp the container assembly 100. A drive mechanism connected to the second limiting member 620 may also be provided, thereby driving the second limiting member 620 to move vertically towards or away from the first limiting member 610, so that the first limiting member 610 and the second limiting member 620 clamp or release the capsule containing printing material.

As shown in FIG. 25, the container assembly 100 moves towards the first limiting member 610 under the action of the second limiting member 620, so that the container assembly 100 is clamped between the first and second limiting members. A support portion 630 may also be provided on the mounting platform 210 and below the first limiting member 610. The support portion 630 is provided with a through-hole through which the second limiting member 620 passes. The user may first move the container assembly 100 horizontally to place it between the support portion 630 and the first limiting member 610. Then the second limiting member 620 is caused to pass through the through-hole and push up the container assembly 100. In other possible embodiments, the support portion 630 may be omitted, and the container assembly 100 may be supported directly by the second limiting member 620.

The outer wall of the container assembly 100 is provided with an outwardly projecting positioning protrusion 113. The second limiting member 620 and the first limiting member 610 are configured to clamp the positioning protrusion 113, with a clamping force applied to the positioning protrusion 113 to achieve positioning of the container assembly 100. This manner of positioning does not compress the container assembly 100, thereby preventing damage to the container assembly 100.

A horizontal opening may be formed between the first limiting member 610 and the second limiting member 620, allowing the container assembly 100 to pass through the horizontal opening and be inserted in a horizontal direction between the first limiting member 610 and the second limiting member 620.

Additionally, a horizontal stop structure may be provided. The horizontal stop structure includes a U-shaped stop surface, the opening of which is oriented in a same direction as the horizontal opening. The U-shaped stop surface includes a first plane, a curved surface and a second plane connected in sequence, with the first plane and the second plane being parallel. The U-shaped stop surface matches the outer wall of the container assembly 100.

In one implementation, the U-shaped stop surface fits the outer wall of the positioning protrusion 113 on the container assembly 100. The positioning protrusion 113 is inserted horizontally between the first plane and the second plane, and is then pushed laterally until the positioning protrusion 113 abuts against the curved surface, thereby completing the horizontal positioning of the container assembly 100. At this time, the light-transmitting assembly of the container assembly 100 is coaxial with the light-transmitting aperture in the second limiting member 620.

The drive mechanism may be operated in various ways, either manually or automatically. In some feasible embodiments, an electric linear actuator may be used to drive the second limiting member 620 up and down.

As shown in FIGs. 26, 27 and 28, in this embodiment, the drive mechanism includes a rotating member 640 rotatably connected to the mounting platform 210. The rotating member 640 is capable only of rotational movement with its rotation axis extending vertically. The rotating member 640 is ring-shaped and fitted over the circumferential outer side of the second limiting member 620. A guiding block 641, projecting towards the inner side of the ring, is provided on the rotating member 640. A guiding groove 621 extending spirally in a vertical direction is provided on the circumferential side wall of the second limiting member 620; and the guiding block 641 is slidably connected within the guiding groove 621. In other feasible embodiments, the guiding groove 621 may be provided on the rotating member 640, whilst the guiding block 641 may be provided on the second limiting member 620.

A guide column is provided between the second limiting member 620 and the mounting platform 210, thereby restricting the second limiting member 620 to vertical movement only and preventing it from rotating. When the rotating member 640 is rotated, it moves along the helical guiding groove 621, thereby driving the second limiting member 620 to move vertically up and down.

A handle 650 may be attached to the rotating member 640. By means of the handle 650, the user can manually rotate the rotating member 640 to cause the second limiting member 620 to move up and down. Of course, the rotation of the rotating member 640 may also be achieved by means of a motor.

It is understood that the handle 650 on the rotating member 640 can serve as an operating portion, thereby allowing the user to perform single-point operation by operating the handle 650 with one hand, thus driving the entire rotating member 640 to move.

The number of guiding grooves 621 and guiding blocks 641 may each be multiple, and they are provided in one-to-one correspondence, thereby ensuring the movement of the second limiting member 620 is stable and reducing wobbling.

A first bearing 660, for example a ball bearing, is provided between the rotating member 640 and the mounting platform 210, thereby increasing the smoothness of rotation of the rotating member 640.

An elastic member is provided between the mounting platform 210 and the second limiting member 620. The elastic member may be a spring 670. The lower end of the spring 670 is connected to the second limiting member 620, whilst its upper end abuts against the bottom surface of the support portion 630 when the container assembly 100 is clamped, remaining in a compressed state. Upon unlocking, the spring 670 releases its elastic force, allowing the second limiting member 620 to descend more easily.

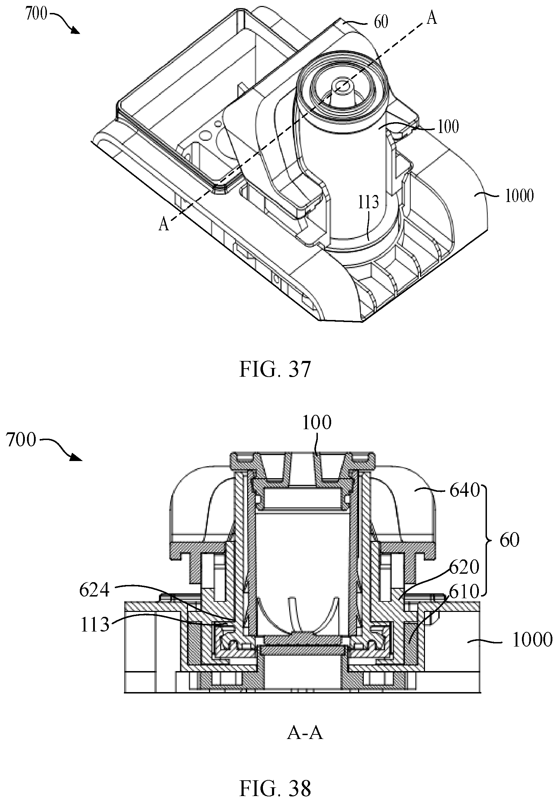

Referring to FIGs. 37 and 38, the present application provides a printing device 700. The printing device 700 may include a device body 1000 and a container assembly 100. In the embodiments of the present application, it is understood that the container assembly 100 may be located within the aforementioned locking structure 60, and the locked and unlocked states of the container assembly 100 are achieved via the locking structure 60. The locking structure 60 is fixedly connected to the device body 1000 via the first limiting member 610, thereby mounting the locking structure 60 on the device body 1000.

Referring again to FIG. 38, based upon the aforementioned embodiment, in one possible implementation, the outer periphery of the container assembly 100 may include a positioning protrusion 113. By way of example, the positioning protrusion 113 may be arranged to project radially outward along the outer surface of the container assembly 100. Accordingly, the second limiting member 620 in the locking structure 60 may include a stepped portion 624, which is positioned to correspond with the positioning protrusion 113. The stepped portion 624 may be provided as an upper part and a lower part spaced apart vertically, thereby forming a limiting groove for receiving the positioning protrusion 113.

In the embodiments of the present application, when the locking structure 60 is in the locked state, the second limiting member 620 in the locking structure 60 drives the container assembly 100 to move to the working position. At this time, the light-transmitting plate of the printing device 700 abuts against and presses the light-transmitting film of the container assembly 100 from the bottom of the container assembly 100, whilst the stepped portion 624 of the second limiting member 620 abuts against the positioning protrusion 113 of the container assembly 100, thereby cooperating with the light-transmitting plate to jointly secure and limit the movement of the container assembly 100. When the locking structure 60 is in the unlocked state, the second limiting member 620 drives the container assembly 100 away from the working position, causing the stepped portion 624 to separate from the positioning protrusion 113; simultaneously, the light-transmitting plate also separates from the bottom of the container assembly 100, leaving the container assembly 100 in a removable state.

When the user operates the protruding end 644 of the rotating member 640 within the locking structure 60 to rotate clockwise, the rotating member 640 drives the second limiting member 620 to move downwards along the first direction, thereby driving the container assembly 100 mounted thereon to move downwards together to the working position. In this position, the light-transmitting plate of the printing device 700 is embedded in the bottom of the container assembly 100 and presses against the light-transmitting film, whilst the stepped member 624 abuts against the positioning protrusion 113, thereby securing the container assembly 100 in place. When the user rotates the protruding end 644 anticlockwise, the rotating member 640 drives the second limiting member 620 to move upwards along the first direction; the container assembly 100 consequently moves upwards away from the working position. The stepped member 624 separates from the positioning protrusion 113, and the light-transmitting plate also disengages from the container assembly 100, thereby unlocking the container assembly 100 to facilitate its removal and replacement. Thus, it is understood that the locking structure 60 enables the rapid locking or unlocking of the container assembly 100, enhancing the overall user experience of the product, whilst also facilitating the replacement and maintenance of individual components, thereby improving the product's competitiveness.

Based on the above embodiments, the printing device 700 may further include a support structure (not shown in the figures). The support structure may be positioned beneath the container assembly 100 and fixed within the device body 1000. In one possible implementation, the support structure is transparent. By way of example, the support structure may be a projection glass; however, the embodiments of the present application are not limited thereto.

Based upon the above embodiments, the support structure may be positioned on the device body 1000 at a location corresponding to the locking structure 60. When the second limiting member 620 drives the container assembly 100 to move to the working position, the support structure inserts in from the bottom of the container assembly 100 and abuts against the light-transmitting film of the container assembly 100, providing stable support for the container assembly 100. Simultaneously, the support structure cooperates with the second limiting member 620 in the locking structure 60 to jointly achieve the positioning and fixation of the container assembly 100 in both the vertical and horizontal directions, ensuring positional accuracy during the printing process.

In the embodiments of the present application, the locking structure 60 provided by the present application drives the second limiting member 620 to move up and down by rotating the rotating member 640, thereby achieving the locked or unlocked state of the container assembly 100. Furthermore, the locking structure 60 includes fewer components, enhancing modular design and ease of operation whilst reducing costs.

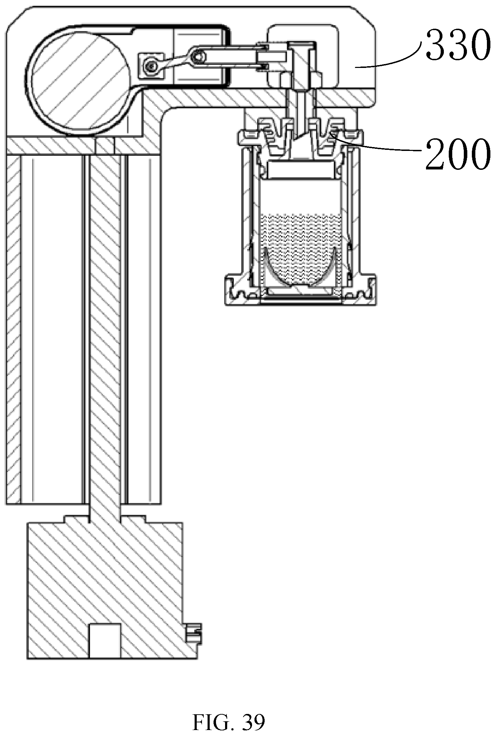

Referring to FIG. 39, in one possible embodiment, the vent 123 may be provided with a sealing member, which may include aluminium foil and/or heat-shrinkable film.

By sealing the vent 123, external air is isolated, preventing the printing material from oxidising or deteriorating due to contact with oxygen. It may also maintain a certain inert gas environment or vacuum level internally, further ensuring the stability of material.

The barrier properties of aluminium foil effectively block gases and moisture, thereby achieving a high-strength seal for the vent 123. The heat-shrinkable film may be fitted over the exterior of the vent 123 prior to heating, and upon heating, it contracts uniformly to tightly wrap around the outer surface of the vent 123, forming a secure seal.

The gas injecting mechanism 300 may be provided with a piercing element 350 for piercing the sealing member.

When the sealing member is to be pierced, the gas injecting mechanism 300 may move towards the sealing member, causing the piercing element 350 to approach the sealing member. The piercing element 350 first comes into contact with the surface of the aluminium foil layer. Under continuously applied axial pressure, the piercing member 350 is capable of piercing the high-strength sealing member to form a penetrating opening, thereby completing the destruction of the sealing member, exposing the vent 123, and consequently allowing the outlet of the gas outlet connector 310 to engage and connect with the vent 123. The piercing member 350 and the outlet may be integrally formed.

In the present application, the movement of the platform assembly away from the light-transmitting assembly may be achieved via a pneumatic drive mode, where the air pressure within the accommodating chamber is controlled to generate a pneumatic driving force that moves the build platform away from the light-transmitting assembly. When the pneumatic drive mode is in operation, only the pneumatic driving force drives the build platform to move away from the light-transmitting assembly. At this point, the cantilever connected to the build platform acts as a limiting portion for this movement. By controlling the cantilever to move to a target position, the end-of-travel limit of the build platform's movement can be precisely controlled to be at that target position. That is, when the build platform moves to the target position, it is blocked by the cantilever and cannot continue moving. It should be noted that the pneumatic driving force in this drive method should be no less than a minimum force required to move the build platform. Alternatively, the cantilever and the build platform may move synchronously; in this implementation, the cantilever and the build platform are in contact. In this implementation, the build platform can be driven towards the light-transmitting assembly by controlling the cantilever to move towards the light-transmitting assembly.

To control the platform assembly to move away from the light-transmitting assembly, a combined mechanical and pneumatic drive mode may be employed. This involves controlling the air pressure within the receiving chamber and utilising the movement of the cantilever to generate a driving force that moves the build platform away from the light-transmitting assembly. In this instance, the pneumatic driving force and the mechanical driving force jointly drive the movement of the build platform; and the sum of the pneumatic and mechanical driving forces should be no less than the driving force required to move the build platform, and the pneumatic driving force may be a relatively small component of this force. When the combined mechanical and pneumatic drive mode is in operation, both the pneumatic driving force and the mechanical driving force drive the build platform away from the light-transmitting assembly. At this point, the cantilever connected to the build platform performs both the driving and limiting functions for this movement. The cantilever is fixedly connected to the build platform. When the cantilever moves away from the light-transmitting assembly, it drives the build platform to move away from the light-transmitting assembly, and when the cantilever moves towards the light-transmitting assembly, it drives the build platform to move towards the light-transmitting assembly. When the cantilever stops, the build platform stops accordingly, enabling precise control of the build platform's movement and position via the cantilever. In this implementation, the sum of the pneumatic driving force and the mechanical driving force is not less than the driving force required to move the build platform.

To control the movement of the platform assembly away from the light-transmitting assembly, a mechanical drive mode may be employed. When the mechanical drive mode is in operation, only the mechanical driving force drives the build platform away from the light-transmitting assembly. At this time, the cantilever connected to the build platform performs both the driving and limiting functions for this movement. The cantilever is fixedly connected to the build platform. Movement of the cantilever away from the light-transmitting assembly drives the build platform to move away from the light-transmitting assembly, whilst movement of the cantilever towards the light-transmitting assembly drives the build platform to move towards the light-transmitting assembly. When the cantilever stops, the build platform stops accordingly, enabling the precise control of the build platform's movement and position via the cantilever. It should be noted that, in this implementation, the receiving chamber is not pressurised, and no pneumatic driving force is applied to the build platform.

Finally, it should be noted that the above embodiments are intended merely to illustrate the technical solutions of the present application and are not intended to limit it; although the present application has been described in detail with reference to the aforementioned embodiments, those skilled in the art will understand that modifications may still be made to the technical solutions described in the aforementioned embodiments, or that some or all of the technical features may be replaced by equivalents; and such modifications or replacements do not cause the essence of the corresponding technical solutions to deviate from the scope of the technical solutions of the embodiments of the present application.

## Claims

1. A container assembly (100), comprising an accommodating chamber, a light-transmitting assembly and a platform assembly (120);
wherein the accommodating chamber is configured to receive a printing material, the platform assembly (120) is movable to move away from or towards the light-transmitting assembly, and the platform assembly (120) comprises a build platform; and
a build chamber (140) is formed between the build platform and the light-transmitting assembly, the accommodating chamber comprises the build chamber (140), and the container assembly (100) is further provided with a vent (123) communicating with the accommodating chamber.

2. The container assembly (100) according to claim 1, wherein the container assembly (100) comprises an outer cylinder (110);
in a first direction, the light-transmitting assembly is provided at one end of the outer cylinder (110), the platform assembly (120) is slidably and sealingly connected to an interior of the outer cylinder (110) in the first direction; and
the accommodating chamber comprises a receiving chamber formed on a side of the build platform away from the light-transmitting assembly, and the receiving chamber communicates with the build chamber (140).

3. The container assembly (100) according to claim 2, wherein the vent (123) is provided in the platform assembly (120).

4. The container assembly (100) according to claim 3, wherein the platform assembly (120) comprises an inner cylinder, and a cavity of the inner cylinder forms the receiving chamber;
the outer cylinder (110) is plug-fit engaged with the inner cylinder, a cavity of the outer cylinder (110) communicates with the cavity of the inner cylinder; and the vent (123) is provided on the inner cylinder;
preferably, an inner wall of the outer cylinder (110) is in sealing engagement with an outer wall of the inner cylinder.

5. The container assembly (100) according to claim 4, wherein the inner cylinder is located inside the outer cylinder (110), an end of the inner cylinder facing the light-transmitting assembly is provided with the build platform, and the build platform is provided with a fluid outlet (122) communicating the build chamber (140) and the receiving chamber.

6. The container assembly (100) according to claim 4, wherein a feed port is provided on the inner cylinder;
preferably, the vent (123) forms the feed port;or, the vent (123) and the feed port are two separate openings.

7. The container assembly (100) according to claim 2, wherein the light-transmitting assembly comprises a lid (112) and a light-transmitting film (111); and
wherein the lid (112) is connected to an opening on one end of the outer cylinder (110), and the light-transmitting film (111) is clamped and secured between the lid (112) and the outer cylinder (110).

8. The container assembly (100) according to claim 7, wherein an outer edge of the lid (112) is provided with a skirt (1121) extending upwards, wherein the skirt (1121) and an outer wall of the outer cylinder (110) are respectively provided with a first protrusion and recess structure (11211) and a second protrusion and recess structure (114) that are interlocking, so that the lid (112) and the outer cylinder (110) are in snap-fit engagement.

9. The container assembly (100) according to claim 7, wherein the lid (112) and the outer cylinder (110) are respectively provided with a third protrusion and recess structure (11212) and a fourth protrusion and recess structure (115) that are in snap-fit engagement; and
an edge of the light-transmitting film (111) is clamped between the third protrusion and recess structure (11212) and the fourth protrusion and recess structure (115) to tension the light-transmitting film (111).

10. A printing device, comprising a light source and a positioning assembly (200),
wherein the positioning assembly (200) is configured to secure a container assembly (100); and the container assembly (100) comprises an accommodating chamber, a light-transmitting assembly and a platform assembly (120),
wherein the accommodating chamber is configured to receive a printing material, the platform assembly (120) is movable to move away from or towards the light-transmitting assembly, and the platform assembly (120) comprises a build platform, and
a build chamber (140) is formed between the build platform and the light-transmitting assembly, the accommodating chamber comprises the build chamber (140), and the container assembly (100) is further provided with a vent (123) communicating with the accommodating chamber, and
the light source is configured to project light towards the light-transmitting assembly of the container assembly (100).

11. The printing device according to claim 10, wherein the printing device further comprises a limiting mechanism (400) and a gas injecting mechanism (300), and an outlet of the gas injecting mechanism (300) is connected to the vent (123); and
wherein the limiting mechanism (400) comprises a limiting portion (330) movable in a first direction and configured to limit a travel distance of the platform assembly (120) in the first direction.

12. The printing device according to claim 11, wherein the gas injecting mechanism (300) is connected to the limiting portion (330), and the limiting portion (330) drives the gas injecting mechanism (300) to move towards or away from the vent (123) to cause the vent (123) and the outlet to dock or disengage.

13. The printing device according to claim 11, wherein the positioning assembly (200) comprises a mounting platform (210) and a clamping assembly,
wherein the mounting platform (210) is configured to position and mount the container assembly (100); and the clamping assembly is configured to clamp and secure the container assembly (100) to the mounting platform (210).

14. The printing device according to claim 13, wherein the clamping assembly comprises a first limiting member (610), a second limiting member (620) and a drive mechanism,
wherein the drive mechanism is connected to the second limiting member (620) to drive the second limiting member (620) to move vertically towards or away from the first limiting member (610), so that the first limiting member (610) and the second limiting member (620) clamp or release the container assembly (100);
preferably, the mounting platform (210) further comprises a support portion located below the first limiting member (610); and
wherein the support portion is provided with a through-hole, the second limiting member (620) is located within the through-hole, and is capable of being raised above the support portion or lowered below the support portion under driving of the drive mechanism.

15. The printing device according to claim 10, further comprising a locking structure,
wherein the locking structure comprises:
a third limiting member;
a fourth limiting member disposed opposite the third limiting member in a first direction, wherein a clamping space for accommodating the container assembly (100) is formed between the third limiting member and the fourth limiting member; and
a rotating member (640), configured to drive at least one of the third limiting member and the fourth limiting member to enable a relative movement between the third limiting member and the fourth limiting member in the first direction to clamp or release the container assembly (100) placed within the clamping space;
preferably, the rotating member (640) is provided with an operating portion configured to allow a user to perform a single-point operation by flicking or pressing the operating portion with one hand to drive the rotating member (640) to move, thereby locking or unlocking the container assembly (100);
wherein the fourth limiting member is slidably positioned on the third limiting member, the rotating member (640) is positioned above the fourth limiting member, and the rotating member (640) is rotatably connected to the third limiting member;
wherein the rotating member (640) is provided with a first shaft (642), a passage (900) is formed between the fourth limiting member and the third limiting member to allow the first shaft (642) to move; and
wherein the first shaft (642) is caused to move the passage (900) to drive the fourth limiting member to slide back and forth on third limiting member in the first direction, thereby locking or unlocking the container assembly (100).
